# EUROPÄISCHE PATENTSCHRIFT

(11) **EP 2 599 915 B1**
(45) Veröffentlichungstag und Bekanntmachung des Hinweises auf die Patenterteilung: **24.01.2018**
(21) Anmeldenummer: 12008077.5
(22) Anmeldetag: 03.12.2012
(51) Int. Cl.: D21H 21/56, D21H 27/18, D21H 27/20, D21H 27/30, B32B 5/18, B32B 5/20, D21F 11/00

(54) **Abdecktapete**
Covering wallpaper
Tapis de recouvrement

(30) Priorität: 02.12.2011 EP 11009551
(43) Veröffentlichungstag der Anmeldung: 05.06.2013
(73) Patentinhaber: LECO-Werke Lechtreck GmbH & Co. KG, 48282 Emsdetten (DE)
(72) Erfinder: Krühler, Wolfgang, D-48282 Emsdetten (DE); Seiger, Christoph, D-48282 Emsdetten (DE)
(74) Vertreter: Bohmann, Armin K.

(56) Entgegenhaltungen:
- DE-A1- 2 358 557
- DE-B1- 3 026 691
- US-A1- 2009 071 097

## Beschreibung

Die vorliegende Erfindung betrifft ein Mittel zum Glätten einer Oberfläche, wobei die Oberfläche wenigstens eine Unebenheit aufweist, ein Verfahren zum Glätten der Oberfläche und Verfahren zur Herstellung eines Mittels zum Glätten der Oberfläche.

Tapeten finden als Wand- und Deckenverkleidungen in vielfacher Weise Anwendung. Am weitesten verbreitet sind hierbei Tapeten aus ein oder mehreren Papier - und Vlieslagen, die typischerweise eine Sichtseite und eine der zu tapezierenden Oberfläche zugewandte Seite aufweisen. Mitunter kann die Sichtseite farbig und/oder mit Strukturen versehen ausgestaltet sein. Papier- und Vliestapeten sind preisgünstig herstellbar und zeichnen sich insbesondere dadurch aus, dass durch die farbige Ausgestaltung der Sichtseite auch farbige Untergründe durch Übertapezieren überdeckt werden können.

Vor allem in den letzten Jahrzenten wurden vermehrt Struktur-Glasgewebe als Wandbeläge bzw. Wand- und Deckenverkleidungen verarbeitet. Typische Beispiele für derartige Strukturgewebe sind Struktur- und/oder Glasgewebe-Tapeten. Diese Struktur-Glasgewebe weisen beispielsweise Fischgrätmuster auf und zeichnen sich dadurch aus, dass aus Dekorationsgründen beim Tapezieren von Wänden oder Decken eine raue, meist gleichmäßig unebene Oberfläche entsteht. Beruhend auf Schätzungen verschiedener Hersteller von Glasgeweben auf der Grundlage von bekannten Produktionsmengen und Marktkenntnissen befinden sich über eine Milliarde m² Glasgewebe allein in Europa an den Wänden.

Die üblicherweise verwendeten Struktur-Glasgewebe werden nicht auf einem Papierrücken oder Vliesrücken kaschiert. Vielmehr wird das Struktur-Glasgewebe direkt auf die Wand aufgetragen. Die Tapete ist einerseits durch den Kleber und anderseits durch die in die Tapete eingedrungene Wandfarbe so fest mit dem Untergrund verklebt, dass sie nahezu unlösbar mit der Wand verbunden ist. Diese Struktur-Glasgewebe können deshalb praktisch nicht wieder von der Wand entfernt werden, zumindest nicht ohne diese erheblich zu beschädigen. Bei einem einfachen "Übertapezieren", beispielsweise mit herkömmlichen Papiertapeten, zeichnen sich die Strukturen des Glasgewebes auf dem neuen Wandbelag ab. Daher muss in den meisten Fällen die Wand aufwendig überspachtelt und/oder geschliffen werden, bevor ein neuer Wandbelag, bspw. eine Tapete, angebracht werden kann.

Ähnlich schwierig gestaltet sich das Übertapezieren von anderen strukturierten Wandbelägen, wie bspw. einem Strukturputz.

Um eine glatte Oberfläche zum Übertapezieren zu erreichen, müssen die mit Struktur-Glasgewebe versehenen Wänden deshalb aufwändig vergipst oder verspachtelt werden.

Statt ein Struktur-Glasgewebe von der Wand aufwendig zu entfernen oder in anderer Art und Weise mit einer Struktur versehene Wand zu überspachteln oder abzuschleifen, kann ein anderer Wandbelag über das Struktur-Glasgewebe oder die besagte Struktur tapeziert werden. In diesem Zusammenhang soll durch das Übertapezieren eine möglichst glatte Fläche entstehen. Diese kann dann ihrerseits wieder tapeziert oder direkt gestrichen werden.

Im Stand der Technik sind Abdecktapeten zum Übertapezieren von Struktur-Glasgewebe bekannt.

Die Abdeckeigenschaften derartiger Abdecktapeten des Standes der Technik sind jedoch bezgl. eines Abdeckens insbesondere Glättens einer Oberfläche, die wenigstens eine Unebenheit aufweist, wie bspw. ein strukturierter Untergrund unzureichend. So sind z.B. Unebenheiten nach deren Verklebung auf beispielsweise eine Glasfaserstrukturtapete oder ein Struktur-Glasgewebe mit einem Fischgrätmuster noch sichtbar. Eine glatte Oberfläche, auf der die Struktur des Glasgewebes nicht mehr zu erkennen ist, wird durch deren Verwendung nicht erreicht.

Zudem sind im Stand der Technik bekannte Tapeten häufig schwer zu verarbeiten. Die im Stand der Technik bekannten Tapeten neigen dazu, bei der Verarbeitung zu brechen, wobei unter Umständen Staub oder Gips-Staub aus den Tapeten herausrieselt und die Oberfläche der Tapete beschädigt wird, womit die Tapete eventuell optisch beeinträchtigt und/oder unbrauchbar wird.

US 2009/071097 betrifft ein Produkt zum Abdecken von Wänden sowie dessen Verwendung. Dabei ist vorgesehen, dass das Produkt eine Rückseite mit einer ersten Polymerschicht umfasst, die auf eine Wandoberfläche aufgetragen wird, die eine zweite Polymerschicht umfasst.

DE 23 58 557 A1 betrifft ein Verfahren zur oberflächenfertigen Verkleidung unebener Bauwerksteile. Bei dem Verfahren ist vorgesehen, dass eine die spätere Verkleidung der Oberfläche bildende Folie, Papierbahn oder dergleichen auf der Rückseite mit einem schäumbaren Kunststoff versehen wird, wobei der Schäumprozess erst unmittelbar vor dem Anbringen der Verkleidung auf die zu verkleidende Fläche eingeleitet wird.

DE 30 26 691 B1 betrifft ein Tapezierverfahren und dafür geeignete Hilfsträger. Bei dem Verfahren ist vorgesehen, dass auf einem Untergrund ein wasserdampfdurchlässiger flächiger Hilfsträger und auf dessen Vorderseite anschließend die Tapete aufgebracht wird.

Der vorliegenden Erfindung liegt die Aufgabe zugrunde ein Mittel zum Glätten einer Oberfläche bereitzustellen, wobei die Oberfläche wenigstens eine Unebenheit aufweist. Eine weiter, der Erfindung zugrunde liegende Aufgabe besteht darin, ein Mittel bereitzustellen, welches geeignet ist, eine Oberfläche, die wenigstens eine Unebenheit aufweist, abzudecken oder zu glätten, wobei die Oberfläche eine strukturierte Oberfläche ist. Schließlich liegt der Erfindung die Aufgabe zugrunde, ein Mittel bereitzustellen, welches geeignet ist, die durch Struktur-Glasgewebe bedingten Unebenheiten einer Oberfläche abzudecken bzw., zu glätten. Bevorzugterweise soll das bereitzustellende Mittel die Unebenheiten so glätten und/oder abdecken, dass sich die wenigstens eine Unebenheit der Oberfläche, die wenigstens eine Unebenheit aufweist, nach dem Anbringen des bereitzustellenden Mittels nicht mehr auf dessen Sichtseite abzeichnet.

Des Weiteren liegt der vorliegenden Erfindung die Aufgabe zugrunde, dass das erfindungsgemäß bereitzustellende Mittel zum Glätten und/oder Abdecken von wenigstens einer Unebenheit auf einer Oberfläche und/oder einer Oberfläche, die wenigstens eine Unebenheit aufweist, leicht zu verarbeiten ist und bei der Verarbeitung weder bricht, reist oder die Sichtseite sonst irgendwie beschädigt wird.

Diese und weitere der vorliegenden Erfindung zugrunde liegende Aufgaben werden erfindungsgemäß durch den Gegenstand der beigefügten unabhängigen Ansprüchen gelöst. Bevorzugte Ausführungsformen ergeben sich aus den Unteransprüchen.

Genauer werden die Aufgaben in einem ersten Aspekt gelöst durch ein rollbares Mittel zum Glätten einer Oberfläche, wobei die Oberfläche wenigstens eine Unebenheit aufweist, wobei das Mittel bevorzugterweise eine Tapete ist, wobei das Mittel eine Trägerschicht und eine Schaumschicht umfassend einen Schaum umfasst, wobei auf einer ersten Seite der Trägerschicht die Schaumschicht angeordnet ist und wobei eine zweite Seite der Trägerschicht der wenigstens eine Unebenheit aufweisenden Oberfläche abgewandt ist, wobei die Trägerschicht und die Schaumschicht optional lösbar miteinander verbunden sind, wobei die Schaumschicht bei einer Kompression auf 50% nach 24 h einen Druckverformungsrest von 0% bis 50%, aufweist und wobei die Trägerschicht eine maximale Kraft von mehr als 2,0 N aufnimmt, wie gemessen in einem Biegetest gemäß DIN ISO 178.

In einer Ausführungsform des ersten Aspektes ist vorgesehen, dass das Mittel eine Stärke von 1,0 mm bis 3,0 mm, bevorzugterweise von 1,0 mm bis 2,5 mm, bevorzugtererweise von 1,0 mm bis 2,0 mm und bevorzugtesterweise von 1,1 mm bis 1,8 mm aufweist.

In einer Ausführungsform des ersten Aspektes ist vorgesehen, dass das Mittel ein Gewicht von 300 g/m² bis 1.000 g/m², bevorzugterweise von 500 g/m² bis 800g/m² oder bevorzugterweise von 300 bis 350 g/m2 aufweist.

In einer Ausführungsform des ersten Aspektes ist vorgesehen, dass die Schaumschicht eine Stärke von 0,5 mm bis 2,8 mm, bevorzugterweise von 0,8 mm bis 2,7 mm, bevorzugtererweise von 0,75 mm bis 2,4 mm und bevorzugtesterweise von 0,8 mm bis 1,1 mm aufweist.

In einer Ausführungsform des ersten Aspektes ist vorgesehen, dass die Schaumschicht eine Dichte von 150 g/dm³ bis 500 g/dm³, bevorzugterweise 200 g/dm³ bis 340 g/dm³ und bevorzugtererweise 270 g/dm³ aufweist.

In einer Ausführungsform des ersten Aspektes ist vorgesehen, dass die Schaumschicht bei einer Kompression auf 50% nach 24 h einen Druckverformungsrest von 15% bis 25% aufweist.

In einer Ausführungsform des ersten Aspektes ist vorgesehen, dass eine zweite Seite der Trägerschicht zur Aufnahme einer weiteren Tapete, eines Anstriches, eines Dispersionsputzes und/oder anderem Wandbelag geeignet ist, wobei wenn das Mittel auf der Oberfläche angebracht ist, die zweite Seite der Trägerschicht der Oberfläche, die wenigstens eine Unebenheit aufweist, abgewandt ist.

In einer Ausführungsform des ersten Aspektes ist vorgesehen, dass die Trägerschicht eine Stärke von 0,3 mm bis 1,0 mm, bevorzugterweise 0,5 mm bis 0,75 mm, bevorzugtererweise 0,55 mm bis 0,65 mm, bevorzugtesterweise 0,6 mm aufweist oder wobei die Trägerschicht eine Stärke von 0,3 mm bis 0,4 mm, bevorzugterweise von 0,35 mm aufweist.

In einer Ausführungsform des ersten Aspektes ist vorgesehen, dass die Trägerschicht eine maximale Kraft von mehr als 2,5 N, von mehr als 5 N, bevorzugterweise von mehr als 7,5 N, bevorzugtererweise von mehr als 9 N, bevorzugtesterweise mehr als 10 N aufnimmt.

In einer Ausführungsform des ersten Aspektes ist vorgesehen, dass die Trägerschicht ein Gewicht von 120 g/m² bis 550 g/m², bevorzugterweise 220 g/m² bis 475 g/m2, bevorzugtererweise 260 g/m² bis 400 g/m2, bevorzugtesterweise 320 g/m² bis 355 g/m2 aufweist oder wobei die Trägerschicht bevorzugterweise ein Gewicht von 130 bis 170 g/m2 aufweist.

In einer Ausführungsform des ersten Aspektes ist vorgesehen, dass die Trägerschicht eine Trägerschicht ist, die eine erste Papierschicht, eine erste Gewebeschicht, eine erste Vliesschicht, und/oder eine erste Kunststoffschicht umfasst.

In einer Ausführungsform des ersten Aspektes ist vorgesehen, dass die Trägerschicht eine erste Vliesschicht und eine zweite Vliesschicht umfasst, wobei die erste Vliesschicht mit der zweiten Vliesschicht verbunden ist und wobei die erste und die zweite Vliesschicht Fasern umfasst, wobei die Fasern, für die erste und die zweite Vliesschicht unabhängig voneinander ausgewählt sind aus der Gruppe umfassend Glasfasern, Zellstofffasern, Polyesterfasern, Naturfasern, Zellulosefasern und Mischungen davon.

In einer Ausführungsform des ersten Aspektes ist vorgesehen, dass die erste Seite und/oder die zweite Seite der Trägerschicht eine Beschichtung aufweist.

Genauer werden die Aufgaben in einem zweiten Aspekt gelöst durch ein Verfahren zum Glätten einer Oberfläche, wobei die Oberfläche wenigstens eine Unebenheit aufweist, umfassend die folgenden Schritte:
Schritt a) Auftragen von Kleber, bevorzugterweise Tapetenkleber, bevorzugtererweise Tapeten-Dispersionskleber auf wässriger Basis auf die Oberfläche, wobei die Oberfläche wenigstens eine Unebenheit aufweist; und/oder Auftragen des Klebers auf die Seite des Mittels, die der wenigstens einen Unebenheit der Oberfläche zugewandt ist wenn das Mittel auf der Oberfläche angebracht ist;
Schritt b) Aufbringen eines Mittels nach einem der vorhergehenden Ansprüche auf die aus Schritt a) erhaltene Oberfläche; und
Schritt c) wahlweise Streichen des Mittels.

Genauer werden die Aufgaben in einem dritten Aspekt gelöst durch ein Verfahren zur Herstellung eines Mittels zum Glätten einer Oberfläche, wobei die Oberfläche wenigstens eine Unebenheit aufweist, wobei das Mittel ein Mittel nach einem der vorhergehenden Ansprüche ist und wobei das Verfahren die folgenden Schritte umfasst:
Schritt a): Bereitstellen einer Trägerschicht;
Schritt b): Aufschäumen eines Schaumes, bevorzugterweise eines Schaumes wie er in einem der vorangehenden Ansprüche definiert ist;
Schritt c): Auftragen des Schaumes auf die Trägerschicht; und
Schritt d): Trocknen des Schaumes.

Schließlich werden die der vorliegenden Erfindung zugrunde liegenden Aufgaben auch durch die im Folgenden angegebenen Ausführungsformen gelöst.

In einer Ausführungsform des ersten Aspektes ist vorgesehen, dass wenn das Mittel auf der Oberfläche angebracht ist, die ersten Seite der Trägerschicht und/oder die Schaumschicht der wenigstens eine Unebenheit aufweisenden Oberfläche zugewandt ist.

In einer Ausführungsform des ersten Aspektes ist vorgesehen, dass die Schaumschicht von der Trägerschicht bei einer angelegten Kraft von ≥ 0,25 N, ≥ 1,0 N, ≥ 2,0 N, oder ≥ 3,0 N gelöst wird.

In einer Ausführungsform des ersten Aspektes ist vorgesehen, dass die Schaumschicht von der Trägerschicht zumindest teilweise gelöst ist, wenn das Mittel auf der Oberfläche, die wenigstens eine Unebenheit aufweist, aufgebracht ist.

In einer Ausführungsform des ersten Aspektes ist vorgesehen, dass das Mittel auf der Oberfläche, die wenigstens eine Unebenheit aufweist, aufgebracht und das Mittel mit der Oberfläche die wenigstens eine Unebenheit aufweist, mittels eines Klebers, bevorzugterweise eines Tapetenklebers, bevorzugtererweise eines Tapeten-Dispersionsklebers auf wässriger Basis befestigt ist.

In einer Ausführungsform des ersten Aspektes ist vorgesehen, dass der Schaum bei einer Kompression auf 50% nach 0,5 h einen Druckverformungsrest von maximal 40%, bevorzugterweise 20% aufweist.

In einer Ausführungsform des ersten Aspektes ist vorgesehen, dass die Schaumschicht bei einer Kompression auf 50% nach 24 h einen Druckverformungsrest von 0% bis 50%, bevorzugterweise 15% bis 25% aufweist.

In einer Ausführungsform des ersten Aspektes ist vorgesehen, dass der Kleber zu weniger als 40% der Stärke der Schaumschicht, bevorzugterweise zu weniger als 30% der Stärke der Schaumschicht, bevorzugtererweise zu weniger als 20% der Stärke der Schaumschicht und bevorzugtesterweise zu weniger als 10% der Stärke der Schaumschicht in die Schaumschicht eindringt.

In einer Ausführungsform des ersten Aspektes ist vorgesehen, dass der Schaum ausgewählt ist aus der Gruppe umfassend einen geschlossenzelligen Schaum, einen offenzelligen Schaum, einen gemischtzelligen Schaum und einen Integralschaum.

In einer Ausführungsform des ersten Aspektes ist vorgesehen, dass der Schaum ausgewählt ist aus der Gruppe umfassend Styrol - Butadien Schaum, Polyurethan, Naturlatex und Bitumen.

In einer Ausführungsform des ersten Aspektes ist vorgesehen, dass der Schaum ausgewählt ist aus der Gruppe umfassend mechanisch hergestellten Schaum, physikalisch hergestellten Schaum und chemisch hergestellten Schaum.

In einer Ausführungsform des ersten Aspektes ist vorgesehen, dass der Styrol-Butadien Schaum ein solcher mit einem Gewichtsverhältnis von Styrol zu Butadien von 48 zu 52 ist.

In einer Ausführungsform des ersten Aspektes ist vorgesehen, dass der Schaum selbstvernetzt ist.

In einer Ausführungsform des ersten Aspektes ist vorgesehen, dass der Schaum wenigstens ein Mittel enthält, das ausgewählt ist aus der Gruppe umfassend Treibmittel, Vernetzungsmittel, Emulgator, Weichmacher, Extender, Stabilisator, Füllstoff, Verstärkungsstoff, Antioxidantien, Fungizid, Bakterizid, Biozid, Farbstoff, Farbpigment und Flammschutzmittel.

In einer Ausführungsform des ersten Aspektes ist vorgesehen, dass das Treibmittel ausgewählt ist aus der Gruppe umfassend Pentane, Methylenchlorid und Kohlendioxid.

In einer Ausführungsform des ersten Aspektes ist vorgesehen, dass das Vernetzungsmittel ausgewählt ist aus der Gruppe umfassend Carbonsäure, Formaldehyd und schwefelhaltige Stoffe.

In einer Ausführungsform des ersten Aspektes ist vorgesehen, dass der Weichmacher ausgewählt ist aus der Gruppe umfassend schwerflüchtige Ester, fette Öle, Weichharze und Campher.

In einer Ausführungsform des ersten Aspektes ist vorgesehen, dass der Extender ausgewählt ist aus der Gruppe umfassend epoxidierte Öle, hochsiedende Mineralöle und Paraffine.

In einer Ausführungsform des ersten Aspektes ist vorgesehen, dass der Stabilisator ausgewählt ist aus der Gruppe umfassend σ-Hydroxybenzophenon, Ruß, polybromierte Diphenylether und Aluminiumhydroxid.

In einer Ausführungsform des ersten Aspektes ist vorgesehen, dass der Füllstoff ausgewählt ist aus der Gruppe umfassend Calciumcarbonat.

In einer Ausführungsform des ersten Aspektes ist vorgesehen, dass der Verstärkungsstoff ausgewählt ist aus der Gruppe umfassend Fasern, Kohlefasern, Glasfasern und Wollastonit.

In einer Ausführungsform des ersten Aspektes ist vorgesehen, dass das Flammschutzmittel ausgewählt ist aus der Gruppe umfassend Aluminiumhydroxyd.

In einer Ausführungsform des ersten Aspektes ist vorgesehen, dass der Schaum keinen Füllstoff enthält.

In einer Ausführungsform des ersten Aspektes ist vorgesehen, dass der Schaum kein Calciumcarbonat enthält.

In einer Ausführungsform des ersten Aspektes ist vorgesehen, dass der Schaum
ein Styrol-Butadien-Schaum ist;
ein Gewichtsverhältnis von Styrol zu Butadien von 48 zu 52 aufweist;
Aluminiumhydroxyd, ein Vernetzungsmittel und einen Emulgator enthält; und kein Calciumcarbonat enthält.

In einer Ausführungsform des ersten Aspektes ist vorgesehen, dass der Schaum
eine Stärke von 0,75 mm bis 1,1mm aufweist;
eine Dichte von 200 g/dm³ bis 340 g/dm³, bevorzugterweise 270 g/dm³ aufweist;
bei einer Kompression auf 50% nach 0,5 h einen Druckverformungsrest von maximal 50% aufweist; und
bei einer Kompression auf 50% nach 24 h einen Druckverformungsrest von maximal 50% aufweist.

In einer Ausführungsform des ersten Aspektes ist vorgesehen, dass der Schaum
ein Styrol-Butadien-Schaum ist;
ein Gewichtsverhältnis von Styrol zu Butadien von 48 zu 52 aufweist;
Aluminiumhydroxyd, ein Vernetzungsmittel und einen Emulgator enthält;
kein Calciumcarbonat enthält;
eine Stärke von 0,75 mm bis 1,1mm aufweist;
eine Dichte von 200 g/dm³ bis 340 g/dm³*,* bevorzugterweise 270 g/dm³ aufweist;
bei einer Kompression auf 50% nach 0,5 h einen Druckverformungsrest von maximal 50% aufweist; und
bei einer Kompression auf 50% nach 24 h einen Druckverformungsrest von maximal 50% aufweist.

In einer Ausführungsform des ersten Aspektes ist vorgesehen, dass die Trägerschicht eine Vorgrundierung umfasst.

In einer Ausführungsform des ersten Aspektes ist vorgesehen, dass die Trägerschicht keine Vorgrundierung umfasst.

In einer Ausführungsform des ersten Aspektes ist vorgesehen, dass die erste Vliesschicht Fasern umfasst, die ausgewählt sind aus der Gruppe umfassend Glasfasern, Zellstofffasern, Polyesterfasern, Naturfasern, Zellulosefasern und Mischungen daraus.

In einer Ausführungsform des ersten Aspektes ist vorgesehen, dass die erste Vliesschicht Fasern umfasst, die ausgewählt sind aus der Gruppe umfassend Glasfasern.

In einer Ausführungsform des ersten Aspektes ist vorgesehen, dass die erste Vliesschicht Fasern umfasst, die ausgewählt sind aus der Gruppe umfassend Zellstofffasern und Polyesterfasern.

In einer Ausführungsform des ersten Aspektes ist vorgesehen, dass die Faserlänge von Glasfasern 10 mm oder weniger, bevorzugterweise 9 mm oder weniger, bevorzugtererweise 7,5 mm oder weniger, bevorzugtesterweise 6 mm oder weniger beträgt.

In einer Ausführungsform des ersten Aspektes ist vorgesehen, dass die Faserlänge der Glasfasern 6 mm bis 8 mm, bevorzugterweise 6 mm beträgt.

In einer Ausführungsform des ersten Aspektes ist vorgesehen, dass die Glasfasern einen Faserdurchmesser von 10 bis 11 µm aufweisen.

In einer Ausführungsform des ersten Aspektes ist vorgesehen, dass die Orientierung von Glasfasern in der ersten Vliesschicht zufällig ist oder in Laufrichtung ist.

In einer Ausführungsform des ersten Aspektes ist vorgesehen, dass die Orientierung von Glasfasern in der ersten Vliesschicht zufällig ist.

In einer Ausführungsform des ersten Aspektes ist vorgesehen, dass die Trägerschicht eine erste Vliesschicht und eine zweite Vliesschicht umfasst, wobei die erste Vliesschicht mit der zweiten Vliesschicht verbunden ist.

In einer Ausführungsform des ersten Aspektes ist vorgesehen, dass die zweite Vliesschicht Fasern umfasst, die ausgewählt sind aus der Gruppe umfassend Glasfasern, Zellstofffasern, Polyesterfasern, Naturfasern, Zellulosefasern und Mischungen davon.

In einer Ausführungsform des ersten Aspektes ist vorgesehen, dass die zweite Vliesschicht Fasern umfasst, die ausgewählt sind aus der Gruppe umfassend Glasfasern.

In einer Ausführungsform des ersten Aspektes ist vorgesehen, dass die zweite Vliesschicht Fasern umfasst, die ausgewählt sind aus der Gruppe umfassend Zellstofffasern und Polyesterfasern.

In einer Ausführungsform des ersten Aspektes ist vorgesehen, dass die zweite Vliesschicht Fasern umfasst, die Polyesterfasern sind.

In einer Ausführungsform des ersten Aspektes ist vorgesehen, dass die Faserlänge von in der zweiten Vliesschicht enthaltenen Glasfasern 10 mm oder weniger, bevorzugterweise 9 mm oder weniger, bevorzugtererweise 7,5 mm oder weniger, bevorzugtesterweise 6mm oder weniger ist.

In einer Ausführungsform des ersten Aspektes ist vorgesehen, dass die Faserlänge von in der zweiten Vliesschicht enthaltenen Glasfasern 6 mm bis 8 mm, bevorzugterweise 6 mm beträgt.

In einer Ausführungsform des ersten Aspektes ist vorgesehen, dass die in der zweiten Vliesschicht enthaltenen Glasfasern einen Faserdurchmesser von 10 bis 11 µm aufweisen.

In einer Ausführungsform des ersten Aspektes ist vorgesehen, dass die Orientierung von in der zweiten Vliesschicht enthaltenen Glasfasern in der zweiten Vliesschicht zufällig oder in Laufrichtung ist.

In einer Ausführungsform des ersten Aspektes ist vorgesehen, dass die Orientierung von in der zweiten Vliesschicht enthaltenen Glasfasern zufällig ist.

In einer Ausführungsform des ersten Aspektes ist vorgesehen, dass eine Orientierung von in der zweiten Vliesschicht enthaltene Glasfasern in Laufrichtung ist.

In einer Ausführungsform des ersten Aspektes ist vorgesehen, dass die zweite Vliesschicht verfestigt ist.

In einer Ausführungsform des ersten Aspektes ist vorgesehen, dass die zweite Vliesschicht kalandriert ist.

In einer Ausführungsform des ersten Aspektes ist vorgesehen, dass die zweite Vliesschicht thermokalandriert ist.

In einer Ausführungsform des ersten Aspektes ist vorgesehen, dass die zweite Vliesschicht einen Acrylatbinder umfasst.

In einer Ausführungsform des ersten Aspektes ist vorgesehen, dass die erste Vliesschicht mit der zweiten Vliesschicht mit einem Mittel verbunden ist, das ausgewählt ist aus der Gruppe umfassend Dispersionskleber.

In einer Ausführungsform des ersten Aspektes ist vorgesehen, dass der Dispersionskleber ein Dispersionskleber auf Polyvinylacetat-Basis ist.

In einer Ausführungsform des ersten Aspektes ist vorgesehen, dass die erste Seite und/oder die zweite Seite der Trägerschicht eine Beschichtung aufweist.

In einer Ausführungsform des ersten Aspektes ist vorgesehen, dass die Beschichtung mindestens einen Stoff umfasst, der ausgewählt ist aus der Gruppe umfassend Polymermischungen, Harze oder mineralische Stoffe.

In einer Ausführungsform des ersten Aspektes ist vorgesehen, dass die Beschichtung mineralische Bestandteile umfasst.

In einer Ausführungsform des ersten Aspektes ist vorgesehen, dass die Trägerschicht durchtränkt ist mit mineralischen Bestandteilen.

In einer Ausführungsform des ersten Aspektes ist vorgesehen, dass ein Flächengewicht der ersten Vliesschicht 60 bis 105g/m², bevorzugterweise 70 g/m²beträgt.

In einer Ausführungsform des ersten Aspektes ist vorgesehen, dass die Trägerschicht ein Bindemittel umfasst, das ausgewählt ist aus der Gruppe umfassend Polyvinylalkohol.

In einer Ausführungsform des ersten Aspektes ist vorgesehen, dass die zweite Seite der Trägerschicht glatt ist.

In einer Ausführungsform des ersten Aspektes ist vorgesehen, dass die zweite Seite der Trägerschicht rau oder strukturiert ist.

In einer Ausführungsform des ersten Aspektes ist vorgesehen, dass die zweite Seite der Trägerschicht farbig ist.

In einer Ausführungsform des ersten Aspektes ist vorgesehen, dass die Trägerschicht Farbpigmente umfasst.

In einer Ausführungsform des ersten Aspektes ist vorgesehen, dass die Trägerschicht
eine Stärke von 0,6 mm aufweist;
ein Gewicht von 320-355 g/m² aufweist;
eine maximale Kraft von mehr als 10 N aufnimmt;
rollbar ist;
eine Glasfasern umfassende Vliesschicht aufweist,
wobei die Faserlänge der Glasfasern 6 mm beträgt,
wobei die Glasfasern einen Faserdurchmesser von 10 bis 11 µm aufweisen, und wobei die Orientierung von Glasfasern in Vliesschicht zufällig ist
oder
wobei oder die Trägerschicht
eine Stärke von 0,35 mm aufweist;
ein Gewicht von 130-170 g/m² aufweist;
eine maximale Kraft von mehr als 10 N aufnimmt;
rollbar ist; und eine Vliesschicht aufweist, wobei das Vlies ein Polyester/Zellulose-Vlies ist.

In einer Ausführungsform des ersten Aspektes ist vorgesehen, dass das Mittel eine Stärke von 1,1 mm bis 3,0 mm, wobei die Trägerschicht eine Stärke von 0,3 mm bis 1,0 mm aufweist und wobei der Schaum eine Stärke von 0,8 mm bis 2,7 mm aufweist.

In einer Ausführungsform des ersten Aspektes ist vorgesehen, dass das Mittel ein Gewicht von 300 g/m² bis 1.000 g/m² aufweist, wobei die Trägerschicht eine Dichte von 520 g/dm³ bis 550 g/dm³ aufweist und wobei der Schaum eine Dichte von 200 g/dm³ bis 340 g/dm³ aufweist.

In einer Ausführungsform des ersten Aspektes ist vorgesehen, dass die wenigstens eine Unebenheit aufweisende Oberfläche ausgewählt ist aus der Gruppe umfassend eine Strukturtapete, eine Glasfaserstrukturtapete, ein Glasgewebe und ein Strukturputz.

In einer Ausführungsform des ersten Aspektes ist vorgesehen, dass die wenigstens eine Unebenheit ausgewählt ist aus der Gruppe umfassend eine Erhöhung und eine Vertiefung.

In einer Ausführungsform des ersten Aspektes ist vorgesehen, dass die Erhöhung eine Höhe von bis zu 2,5mm, bevorzugt bis zu 1,5 mm aufweist.

In einer Ausführungsform des ersten Aspektes ist vorgesehen, dass die Vertiefung eine Breite von bis zu 2,5 mm, bis zu 5 mm, oder bis zu 10 mm aufweist.

In einer Ausführungsform des ersten Aspektes ist vorgesehen, dass die Oberfläche wenigstens eine Unebenheit aufweist, wobei das Mittel bevorzugterweise eine Tapete ist, wobei das Mittel eine Trägerschicht und eine Schaumschicht umfassend einen Schaum umfasst, wobei die Schaumschicht auf einer ersten Seite der Trägerschicht angeordnet ist und wobei eine zweite Seite der Trägerschicht der Oberfläche, die wenigstens eine Unebenheit aufweist, abgewandt ist,
wobei der Schaum
ein Styrol-Butadien-Schaum ist;
ein Gewichtsverhältnis von Styrol zu Butadien von 48 zu 52 aufweist;
Aluminiumhydroxyd, ein Vernetzungsmittel und einen Emulgator enthält;
kein Calciumcarbonat enthält;
eine Stärke von 0,75 mm bis 1,1mm aufweist;
eine Dichte von 200 g/dm³ bis 340 g/dm³, bevorzugterweise 270 g/dm³ aufweist;
bei einer Kompression auf 50% nach 0,5 h einen Druckverformungsrest von maximal 50% aufweist; und
bei einer Kompression auf 50% nach 24 h einen Druckverformungsrest von maximal 50% aufweist; und
wobei die Trägerschicht
eine Stärke von 0,6 mm oder 0,35 mm aufweist;
ein Gewicht von 320-355 g/m² oder 130-170 g/m² aufweist;
eine maximale Kraft von mehr als 10 N aufnimmt;
rollbar ist;
eine Vliesschicht aufweist, wobei die Vliesschicht entweder Glasfasern umfasst oder die Vliesschicht ein Polyester/Zellulose-Vlies ist,
wobei die Faserlänge der Glasfasern 6 mm beträgt,
wobei die Glasfasern einen Faserdurchmesser von 10 bis 11 µm aufweisen, und wobei
die Orientierung von Glasfasern in Vliesschicht zufällig ist.

In einer Ausführungsform des ersten Aspektes ist vorgesehen, dass die Oberfläche wenigstens eine Unebenheit aufweist, wobei das Mittel bevorzugterweise eine Tapete ist, wobei das Mittel eine Trägerschicht und eine Schaumschicht umfassend einen Schaum umfasst, wobei die Schaumschicht auf einer ersten Seite der Trägerschicht angeordnet ist und wobei eine zweite Seite der Trägerschicht der Oberfläche, die wenigstens eine Unebenheit aufweist, abgewandt ist,
wobei der Schaum
ein Styrol-Butadien-Schaum ist;
ein Gewichtsverhältnis von Styrol zu Butadien von 48 zu 52 aufweist;
Aluminiumhydroxyd, ein Vernetzungsmittel und einen Emulgator enthält;
kein Calciumcarbonat enthält;
eine Stärke von 0,75 mm bis 1,1mm aufweist;
eine Dichte von 200 g/dm³ bis 340 g/dm³, bevorzugterweise 270 g/dm³ aufweist;
bei einer Kompression auf 50% nach 0,5 h einen Druckverformungsrest von maximal 50% aufweist; und
bei einer Kompression auf 50% nach 24 h einen Druckverformungsrest von maximal 50% aufweist; und
wobei die Trägerschicht
eine Stärke von 0,6 mm oder 0,35 mm aufweist;
ein Gewicht von 320-355 g/m² oder 130-170 g/m² aufweist;
eine maximale Kraft von mehr als 10 N aufnimmt;
rollbar ist;
eine Vliesschicht aufweist, wobei die Vliesschicht entweder Glasfasern umfasst oder die Vliesschicht ein Polyester/Zellulose-Vlies ist,
wobei die Faserlänge der Glasfasern 6 mm beträgt,
wobei die Glasfasern einen Faserdurchmesser von 10 bis 11 µm aufweisen, und wobei
die Orientierung von Glasfasern in Vliesschicht zufällig ist.
wobei die zweite Seite der Trägerschicht eine Beschichtung aufweist, wobei die Beschichtung eine Polymermischung umfasst.

In einer Ausführungsform des zweiten Aspektes ist vorgesehen, dass die wenigstens eine Unebenheit aufweisende Oberfläche ausgewählt ist aus der Gruppe umfassend eine Strukturtapete, eine Glasfaserstrukturtapete, ein Glasgewebe und ein Strukturputz.

In einer Ausführungsform des zweiten Aspektes ist vorgesehen, dass die wenigstens eine Unebenheit ausgewählt ist aus der Gruppe umfassend eine Erhöhung und eine Vertiefung.

In einer Ausführungsform des zweiten Aspektes ist vorgesehen, dass die Erhöhung eine Höhe von bis zu 2,5 mm, bevorzugt bis zu 1,5 mm aufweist.

In einer Ausführungsform des zweiten Aspektes ist vorgesehen, dass die Vertiefung eine Breite von bis zu 2,5 mm, bis zu 5 mm, oder bis zu 10 mm aufweist.

In einer Ausführungsform des dritten Aspektes ist vorgesehen, dass Schritt a) weiter umfasst Kaschieren der Trägerschicht und/oder Beschichten der Trägerschicht, bevorzugterweise Kaschieren der zweiten Seite der Trägerschicht und/oder Beschichten der zweiten Seite der Trägerschicht.

In einer Ausführungsform des zweiten und dritten Aspektes ist vorgesehen, dass in Schritt b) das Aufschäumen des Schaumes mittels mechanischem Schaumschlagverfahren erfolgt, wobei bevorzugterweise in einer Aufschäumanlage durch Einschlagen oder Einblasen von Luft und/oder Gas, bevorzugtererweise gleichmäßiges Einschlagen oder Einblasen von Luft und/oder Gas der Schaum schaumig geschlagen wird.

In einer Ausführungsform des zweiten und dritten Aspektes ist vorgesehen, dass der Schaum in Schritt b) von einem ursprünglichen Litergewicht von bevorzugterweise 1.000 g/dm³ bis 1.100 g/dm³ auf eine Dichte wie in einem der vorangehenden Ausführungsformenn definiert, bevorzugtesterweise einer Dichte von 200 g/dm³ bis 340 g/ dm³ aufgeschäumt wird.

In einer Ausführungsform des zweiten und dritten Aspektes ist vorgesehen, dass in Schritt c) das Auftragen des Schaumes auf die Trägerschicht mittels eines Rakels, bevorzugterweise eines Walzenrakels erfolgt.

In einer Ausführungsform des zweiten und dritten Aspektes ist vorgesehen, dass in Schritt c) das Auftragen des Schaumes in einer gleichmäßigen Stärke, bevorzugterweise einer Stärke von 0,6 mm bis 2,5 mm, bevorzugtererweise von 0,8 mm bis 2,0 mm erfolgt.

In einer Ausführungsform des zweiten und dritten Aspektes ist vorgesehen, dass Schritt d) weiter umfasst Vortrocknen des aus den Schritten a) bis c) erhaltenen Schaums, wobei das Vortrocknen des Schaums bevorzugterweise mittels eines IR-Feldes erfolgt.

Verfahren nach einer der Ausführungsformen 85 bis 96, wobei In einer Ausführungsform des zweiten und dritten Aspektes ist vorgesehen, dass Schritt d) weiter umfasst Endtrocknen des aus den Schritten a) bis c) erhaltenen Schaums, wobei das Endtrocknen bevorzugterweise in einem Ofen, bevorzugterweise bei einer Temperatur von 140-160°C erfolgt.

Ebenfalls offenbart ist die Verwendung eines Schaumes, bevorzugterweise eines Schaumes wie hierin definiert, zur Herstellung eines Mittels, wobei das Mittel ein Mittel zum Glätten einer Oberfläche, wobei die Oberfläche wenigstens eine Unebenheit aufweist.

Auch offenbart ist die Verwendung eines Mittels zum Anbringen auf einer Oberfläche die wenigstens eine Unebenheit aufweist, wobei das Mittel ein Mittel gemäß der vorliegenden Erfindung ist.

Schließlich ist offenbart die Verwendung eines Mittels gemäß dem ersten Aspekt zum Glätten einer Oberfläche, wobei die Oberfläche wenigstens eine Unebenheit aufweist.

Der vorliegenden Erfindung liegt die überraschende Erkenntnis zugrunde, dass ein Mittel zum Glätten einer Oberfläche, wobei die Oberfläche wenigstens eine Unebenheit aufweist, wobei das Mittel bevorzugterweise eine Tapete ist, wobei das Mittel eine Trägerschicht und eine Schaumschicht umfassend einen Schaum umfasst, wobei die Schaumschicht auf einer ersten Seite der Trägerschicht angeordnet ist und wobei eine zweite Seite der Trägerschicht der wenigstens eine Unebenheit aufweisenden Oberfläche abgewandt ist, zum Glätten von einer Oberfläche, die wenigstens eine Unebenheit aufweist geeignet ist.

Die vorliegenden Erfinder haben überraschenderweise gefunden, dass ein Mittel zum Glätten einer Oberfläche, wobei die Oberfläche wenigstens eine Unebenheit aufweist, wie bspw. dem Glätten von mit Strukturglasgeweben versehenen Untergründen, einerseits starr sein muss, so dass sich die Muster des Glasgewebes nicht mehr abzeichnen, andererseits jedoch das Mittel nicht so starr sein darf, dass sie nicht mehr zu verarbeiten ist oder nicht mehr gerollt werden kann. In einer bevorzugten Ausführungsform ist das Mittel eine Tapete. Alternativ ist in einer Ausführungsform das Mittel ein Kaltschaum, das bevorzugterweise eine Trägerfolie als Trägermaterial umfasst.

Die folgenden Ausführungen werden unter Bezugnahme auf jene Ausführungsform des erfindungsgemäßen Mittels gemacht, die eine Tapete darstellt. Es wird jedoch von den Fachleuten anerkannt werden, dass diese auch für andere, von einer Tapete verschiedene Ausführungsformen des erfindungsgemäßen Mittels gelten.

Je härter bzw. steifer eine Tapete ist, desto eher entstehen beim Rollen oder Verarbeiten Knickstellen oder Beschädigungen wie bspw. Risse, die die Tapete unbrauchbar oder unverkäuflich machen. Dies ist insbesondere der Fall, wenn die Oberfläche der Tapete optisch beeinträchtigt ist.

Struktur-Glasgewebetapeten, wie sie derzeit zum Einsatz kommen, sind fest mit der Wand verbunden. Soll eine glatte Wand für einen erneuten Anstrich und/oder eine neue Tapete erzeugt werden, ist hierbei ein aufwändiges Verspachteln und/oder Abschleifen der mit einer Struktur versehenen Oberfläche bzw. Wand oder Decke notwendig.

Ein einfaches Übertapezieren einer derartigen wenigstens eine Unebenheit aufweisende Oberfläche mit einer gewöhnlichen Papier- und Vliestapete oder einer aus dem Stand der Technik bekannten Abdecktapete erreicht dieses Ziel nicht bzw. nicht ausreichend, da der Kleber beim Antrocknen typischerweise eine starke Kraft auf die Papiertapete oder Abdecktapete aus dem Stand der Technik ausübt, so dass die zum Übertapezieren verwendete Papiertapete oder Abdecktapete die Struktur und die Unebenheiten der Oberfläche, die wenigstens eine Unebenheit aufweist, abbildet und/oder die Oberfläche der Papiertapete oder Abdecktapete reist, bricht oder anderweitig beschädigt wird.

Die erfindungsgemäße Tapete verwirklicht sowohl eine gute Verarbeitbarkeit als auch eine zufriedenstellende Abdeckeigenschaft indem die Tapete eine Trägerschicht und eine Schaumschicht umfassend einen Schaum umfasst, wobei die Schaumschicht auf einer ersten Seite der Trägerschicht angeordnet ist und wobei eine zweite Seite der Trägerschicht der wenigstens eine Unebenheit aufweisenden Oberfläche abgewandt ist.

Um die maximale Kraft zu bestimmen, das erfindungsgemäße Mittel, bspw. die erfindungsgemäße Tapete und/oder die Trägerschicht des erfindungsgemäßen Mittels aufnehmen kann, wird bevorzugterweise der in Beispiel 1 beschriebene Test, genauer der Biegetest genannte Test, verwendet.

Um zu bestimmen, ob das erfindungsgemäße Mittel, bspw. die erfindungsgemäße Tapete und/oder die Trägerschicht des erfindungsgemäßen Mittels rollbar ist, wird bevorzugterweise der in Beispiel 1 beschriebene Test, genauer der Rollbarkeitstest genannte Test, verwendet.

Um die Druckeigenschaften des erfindungsgemäßen Mittels, bspw. der erfindungsgemäßen Tapete und/oder der Trägerschicht des erfindungsgemäßen Mittels zu bestimmen, wird bevorzugterweise der in Beispiel 1 beschriebene Test, genauer der Drucktest genannte Test, verwendet.

Um die Zugeigenschaften des erfindungsgemäßen Mittels, bspw. der erfindungsgemäßen Tapete und/oder der Trägerschicht des erfindungsgemäßen Mittels zu bestimmen, wird bevorzugterweise der in Beispiel 1 beschriebene Test, genauer der Zugtest genannte Test, verwendet.

Ein Mittel zum Glätten einer Oberfläche gemäß der vorliegenden Erfindung ist ein Mittel, das auf einer Oberfläche angebracht ist oder dazu geeignet ist, wobei die Oberfläche wenigstens eine Unebenheit aufweist, die durch das erfindungsgemäße Mittel abgedeckt uns insbesondere geglättet wird. Genauer wird eine Oberfläche, die wenigstens eine Unebenheit aufweist, durch das Aufbringen des erfindungsgemäßen Mittels so geglättet, dass die Unebenheit nicht mehr zu erkennen ist. Bevorzugterweise gilt die Oberfläche als glatt und/oder die Unebenheit nicht als mehr zu erkennen, wenn bei einer visuellen Beurteilung bei unterschiedlichem Lichteinfall von Kunstlicht und von Tageslicht zu unterschiedlichen Tageszeiten keine Unebenheit mehr zu erkennen ist. Beispielsweise kann eine derartige Oberfläche ein Wand- und/oder Deckenbelag sein, der mit einer Struktur versehen ist. Ein solcher Wand- und/oder Deckenbelag ist beispielsweise eine Strukturglastapete mit Fischgrätmuster. Ein Fachmann wird jedoch erkennen, dass die wenigstens eine Unebenheit aufweisende Oberfläche, die mit einem erfindungsgemäßen Mittel geglättet werden kann, nicht auf Strukturglastapeten beschränkt sind. Vielmehr können verschiedene wenigstens eine Unebenheit aufweisende Oberflächen durch An- oder Aufbringen des erfindungsgemäßen Mittels geglättet werden. Beispielsweise können solche wenigstens eine Unebenheit aufweisende Oberflächen Strukturtapeten, Strukturglastapeten, Strukturputze und Holzpanele umfassen. Eine Unebenheit wie hierin verwendet bezeichnet deshalb bevorzugterweise eine Struktur, Erhöhung und/oder Vertiefung auf einer zu glättenden bzw. abzudeckenden Oberfläche. In diesem Zusammenhang wird verstanden werden, dass Risse in Oberflächen Vertiefungen auf einer sonst bevorzugterweise glatten Oberfläche darstellen und ebenso von dem Begriff Unebenheit umfasst sind. Solche Risse bilden optische Beeinträchtigungen der Oberfläche, die sich nach dem Übertapezieren mit handelsüblichen Papiertapeten abzeichnen. Das Anbringen des Mittels gemäß der vorliegenden Erfindung eignet sich deshalb auch zum Glätten und Abdecken von Rissen. Ebenso stellen Vertiefungen in einem Strukturputz wenigstens eine Unebenheit dar, die mittels des erfindungsgemäßen Mittels geglättet werden können.

Die vorliegenden Erfinder haben gefunden, dass hinsichtlich der zu glättenden und wenigstens eine Unebenheit aufweisenden Oberflächen grundsätzlich praktisch keine Einschränkungen bestehen. Lediglich sofern die wenigstens eine Unebenheit aufweisende Oberfläche ein Strukturputz ist, wird verstanden werden, dass ein Strukturputz durch das Anbringen des erfindungsgemäßen Mittels nur geglättet werden kann, wenn der Strukturputz keine hochliegenden Spitzstellen hat, die das erfindungsgemäße Mittel beschädigen, indem sie bspw. das erfindungsgemäße Mittel durchstoßen. In diesem Zusammenhang ist beachtlich, dass das erfindungsgemäße Mittel geeignet ist zum Glätten von wenigstens eine Unebenheit aufweisenden Oberflächen, wenn bevorzugterweise mehr als 50-60% der Oberfläche glatt ist, d.h. keine Unebenheit aufweist. In diesem Fall können bspw. Vertiefungen von mehreren Millimetern Breite und mehreren Millimetern Tiefe überdeckt und damit geglättet werden. In einer Ausführungsform des Mittels gemäß der vorliegenden Erfindung eignet sich das Mittel zum Glätten von Oberflächen, die wenigstens eine Unebenheit in Form wenigstens einer Erhöhung von bevorzugterweise bis zu 2,5 mm und bevorzugtererweise bis zu 1,5 mm aufweisen. In einer weiteren Ausführungsform des Mittels gemäß der vorliegenden Erfindung eignet sich das Mittel zum Glätten von Oberflächen, die wenigstens eine Unebenheit in Form eines Fischgrätmusters aufweist. Ein solches Fischgrätmuster weist beispielsweise eine Länge des parallelen Bereiches zwischen zwei "Gräten" von etwa 38 mm und einen Abstand von zwei "Gräten" an Hochpunkten von etwa 11 mm, eine Gesamtdicke bei 2 kPa Auflast von 0,83 mm und eine Dicke des Gewebes unter 2 kPa Auflast von 0,18 mm auf, wobei eine ideale berechnete Vertiefung 0,325 mm beträgt. Ein Fachmann wird in diesem Zusammenhang anerkennen, dass die in der Praxis an der Wand gemessen Vertiefungen bei einmal gestrichenen Oberflächen abweichen können und bei einem wie oben beschriebenen Fischgrätmuster bis zu 1,20 mm betragen können.

Das erfindungsgemäße Mittel zum Glätten einer Oberfläche, wobei die Oberfläche wenigstens eine Unebenheit aufweist, umfasst eine Trägerschicht und eine Schaumschicht umfassend einen Schaum. In einer Ausführungsform des Mittels gemäß der vorliegenden Erfindung ist das Mittel eine Tapete zum Glätten einer Oberfläche, wobei die Oberfläche wenigstens eine Unebenheit aufweist, wobei die Tapete eine Trägerschicht und eine Schaumschicht umfassend einen Schaum umfasst.

In einer Ausführungsform des erfindungsgemäßen Mittels zeigt das Mittel bei einem hierin beschriebenen Zugtest, bevorzugterweise dem in Beispiel 1 hierin beschriebenen Zugtest, bevorzugterweise gleich oder weniger als 25% bevorzugtererweise gleich oder weniger als 14% Verformung bzw. Auslenkung an der Oberfläche des erfindungsgemäßen Mittels.
In einer Ausführungsform des erfindungsgemäßen Mittels zeigt das Mittel bei einem hierin beschriebenen Zugtest, bevorzugterweise dem in Beispiel 1 hierin beschriebenen Zugtest, bevorzugterweise bei 1,0 mm Zug an dem erfindungsgemäßen Mittel gleich oder weniger als 0,14 mm Verformung bzw. Auslenkung an der Oberfläche des erfindungsgemäßen Mittels.
In einer Ausführungsform des erfindungsgemäßen Mittels zeigt das Mittel bei einem hierin beschriebenen Zugtest, bevorzugterweise dem in Beispiel 1 hierin beschriebenen Zugtest, bevorzugterweise bei 1,0 mm Zug an dem erfindungsgemäßen Mittel weniger als 0,25mm Verformung bzw. Auslenkung an der Oberfläche des erfindungsgemäßen Mittels.

In einer Ausführungsform des erfindungsgemäßen Mittels zeigt das Mittel bei einem hierin beschriebenen Drucktest bevorzugterweise dem in Beispiel 1 hierin beschriebenen Drucktest, bevorzugterweise bei 1,0 mm Druck an dem erfindungsgemäßen Mittel gleich oder weniger als 40%, bevorzugterweise weniger als 32% Verformung bzw. Auslenkung an der Oberfläche des erfindungsgemäßen Mittels.

In einer Ausführungsform des erfindungsgemäßen Mittels zeigt das Mittel bei einem hierin beschriebenen Drucktest bevorzugterweise dem in Beispiel 1 hierin beschriebenen Drucktest, bevorzugterweise bei 0,5 mm Druck an dem erfindungsgemäßen Mittel weniger als 30%, bevorzugterweise weniger als 24% Verformung bzw. Auslenkung an der Oberfläche des erfindungsgemäßen Mittels.

In einer Ausführungsform des erfindungsgemäßen Mittels zeigt das Mittel bei einem hierin beschriebenen Drucktest bevorzugterweise dem in Beispiel 1 hierin beschriebenen Drucktest, bevorzugterweise bei 1,0 mm Druck an dem erfindungsgemäßen Mittel gleich oder weniger als 20%, Verformung bzw. Auslenkung an der Oberfläche des erfindungsgemäßen Mittels.
In einer Ausführungsform des erfindungsgemäßen Mittels zeigt das Mittel bei einem hierin beschriebenen Drucktest, bevorzugterweise dem in Beispiel 1 hierin beschriebenen Drucktest, bevorzugterweise bei 1,0 mm Druck an dem erfindungsgemäßen Mittel gleich oder weniger als 0,20 mm Verformung bzw. Auslenkung an der Oberfläche des erfindungsgemäßen Mittels.

In einer Ausführungsform des erfindungsgemäßen Mittels zeigt das Mittel bei einem hierin beschriebenen Drucktest bevorzugterweise dem in Beispiel 1 hierin beschriebenen Drucktest, bevorzugterweise bei 0,5 mm Druck an dem erfindungsgemäßen Mittel gleich oder weniger als 0,118%, Verformung bzw. Auslenkung an der Oberfläche des erfindungsgemäßen Mittels. In einer Ausführungsform des erfindungsgemäßen Mittels zeigt das Mittel bei einem hierin beschriebenen Drucktest, bevorzugterweise dem in Beispiel 1 hierin beschriebenen Drucktest, bevorzugterweise bei 0,5 mm Druck an dem erfindungsgemäßen Mittel gleich oder weniger als 0,059 mm Verformung bzw. Auslenkung an der Oberfläche des erfindungsgemäßen Mittels.

In einer Ausführungsform des erfindungsgemäßen Mittels zeigt das Mittel bei einem hierin beschriebenen Drucktest bevorzugterweise dem in Beispiel 1 hierin beschriebenen Drucktest, bevorzugterweise bei 0,5 mm Druck an dem erfindungsgemäßen Mittel gleich oder weniger als 0,212%, Verformung bzw. Auslenkung an der Oberfläche des erfindungsgemäßen Mittels. In einer Ausführungsform des erfindungsgemäßen Mittels zeigt das Mittel bei einem hierin beschriebenen Drucktest, bevorzugterweise dem in Beispiel 1 hierin beschriebenen Drucktest, bevorzugterweise bei 0,5 mm Druck an dem erfindungsgemäßen Mittel gleich oder weniger als 0,106 mm Verformung bzw. Auslenkung an der Oberfläche des erfindungsgemäßen Mittels.

In einer Ausführungsform des erfindungsgemäßen Mittels zeigt das Mittel bei einem hierin beschriebenen Zugtest, bevorzugterweise dem in Beispiel 1 hierin beschriebenen Zugtest, gleich oder weniger als 14,4%, bevorzugtererweise gleich oder weniger als 8% Verformung bzw. Auslenkung an der Oberfläche des erfindungsgemäßen Mittels.
In einer Ausführungsform des erfindungsgemäßen Mittels zeigt das Mittel bei einem hierin beschriebenen Zugtest, bevorzugterweise dem in Beispiel 1 hierin beschriebenen Zugtest, bevorzugterweise bei 1,0 mm Zug an dem erfindungsgemäßen Mittel gleich oder weniger als 0,144 mm Verformung bzw. Auslenkung an der Oberfläche des erfindungsgemäßen Mittels. In einer Ausführungsform des erfindungsgemäßen Mittels zeigt das Mittel bei einem hierin beschriebenen Zugtest, bevorzugterweise dem in Beispiel 1 hierin beschriebenen Zugtest, bevorzugterweise bei 1,0 mm Zug an dem erfindungsgemäßen Mittel gleich oder weniger als 0,080 mm Verformung bzw. Auslenkung an der Oberfläche des erfindungsgemäßen Mittels.

Hier ist das Verhältnis bei 0,3 - 1,0 mm Eindrückung relativ linear.

Im Zusammenhang insbesondere mit den letzten drei vorstehenden Ausführungsformen ist anzuerkennen, dass das Verhältnis von Verformung bzw. Auslenkung an der Oberfläche des erfindungsgemäßen Mittels zu der Eindrückung, wie sie im Rahmen des Zugtestes bzw. Drucktestes bei einem Bereich des Zugs bzw. Eindrückens von 0,3 bis 1,0 mm erfolgt, linear bevorzugterweise relativ linear ist.

In einer Ausführungsform des erfindungsgemäßen Mittels zeigt ein Mittel bei einem wie hierin beschriebenen Drucktest bevorzugterweise dem wie in Beispiel 1 hierin beschriebenen Drucktest, bevorzugterweise bei 0,5 mm Druck am Probenstück weniger als 24%, bevorzugterweise weniger als 30% Verformung an der Oberfläche des Probenstücks.

In einer Ausführungsform des Mittels gemäß der vorliegenden Erfindung ist die Trägerschicht ein Glasvlies. Ein Fachmann wird anerkennen, dass ein Glasvlies als Trägerschicht oder Teil einer Trägerschicht vorteilhafte Eigenschaften aufweist. Beispielsweise ist Glasvlies strapazierfähig, hygienisch, feuchtigkeitsabweisend, schwer entflammbar und stoßfest. In einer Ausführungsform des Mittels gemäß der vorliegenden Erfindung umfasst ein Glasvlies und/oder eine Trägerschicht Glasfasern. In diesem Zusammenhang haben Glasfasern, wenn diese in einer Schicht und/oder in einem Vlies angeordnet sind, eine Orientierung. Die Glasfasern innerhalb eines Vlieses können sich zufällig in unterschiedliche Richtungen orientieren, d.h. die Orientierung der Glasfasern ist - dann - zufällig, oder die Glasfasern innerhalb eines Vlieses orientieren sich in eine bestimmte Richtung, bspw. in Richtung der Laufrichtung des Vlieses, in diesem Fall liegt die Orientierung der Glasflasern in Laufrichtung vor.

Es ist jedoch auch im Rahmen der vorliegenden Erfindung, dass als für eine Trägerschicht verwendetes Material, hierin auch als Trägermaterial bezeichnet, andere Stoffe oder Stoffgemische verwendet werden können, die bevorzugterweise wenigstens eine der obengenannten vorteilhaften Eigenschaften aufweisen. Solche Trägermaterialien umfassen ebenso Stoffe, die durch eine Ausrüstung wenigstens eine der oben genannten vorteilhaften Eigenschaften erhalten. In einer Ausführungsform des Mittels gemäß der vorliegenden Erfindung sind als Trägermaterial Vliesstoffe vorgesehen, die bevorzugterweise mit einer Ausrüstung versehen sind, die der Trägerschicht des erfindungsgemäßen Mittels solche vorteilhaften Eigenschaften verleihen. In einer bevorzugten Ausführungsform des Mittels gemäß der vorliegenden Erfindung weist die Trägerschicht Eigenschaften auf, die ausgewählt sind aus der Gruppe umfassend Rollbarkeit, Beschichtbarkeit, Ausrüstbarkeit und Überstreichbarkeit. Grundsätzlich muss das Trägermaterial bzw. das erfindungsgemäße Mittel zum Einsatz für den Innenbereich geeignet sein. In einer Ausführungsform des Mittels gemäß der vorliegenden Erfindung ist das Mittel zum Einsatz im Innenbereich vorgesehen. In diesem Zusammenhang ist das Trägermaterial und bevorzugterweise die Trägerschicht UV-beständig und/oder Temperatur-beständig und/oder alterungsbeständig. Temperatur-beständig wie hierin verwendet bezeichnet bevorzugterweise, dass ein Stoff, wenn dieser Temperaturen von bis +60°C ausgesetzt ist seine Eigenschaften umfassend Form und chemische Zusammensetzung nicht verändert und bevorzugtererweise sich nicht thermisch zersetzt.

Das Mittel gemäß der vorliegenden Erfindung umfasst eine Schaumschicht umfassend einen Schaum. Die vorliegenden Erfinder nehmen an, ohne im Folgenden daran gebunden sein zu wollen, dass die Schaumschicht als eine Trennschicht oder Vermittlungsschicht dient, die zwischen der wenigstens eine Unebenheit aufweisenden Oberfläche und der Trägerschicht bzw. einer optional auf der Trägerschicht aufgebrachten Beschichtung, Ausrüstung oder Tapete dient. Dabei wird davon ausgegangen, dass der Kleber trocknet und das Mittel gemäß der vorliegenden Erfindung dabei an die zu glättende Oberfläche anzieht. Hierbei dient der Schaum - funktionell - ggf. als Puffer. Der Kleber zieht einerseits den Schaum in die Vertiefung einer der wenigstens einen Unebenheiten und/oder anderseits wird der Schaum gleichzeitig an den Hochpunkten einer anderen der wenigstens einen Unebenheiten komprimiert. Die Tapetenoberfläche selbst wird hierbei jedoch nicht mit in die Vertiefung gezogen bzw. auf die Hochpunkte gedrückt, da der Schaum nicht die dafür erforderliche Zugkraft bzw. Druckkraft aufbringen kann. Hieraus resultiert, dass bevorzugterweise die Oberfläche des erfindungsgemäßen Mittels, d.h. die Sichtseite des erfindungsgemäßen Mittels keine sichtbare Vertiefung oder Erhöhung aufweist. Mit anderen Worten glättet das erfindungsgemäße Mittel die Oberfläche, die wenigstens eine Unebenheit aufweist und schafft durch die Oberfläche, insbesondere die Sichtseite des Mittels eine glatte Oberfläche.

In einer Ausführungsform des Mittels gemäß der vorliegenden Erfindung ist das Mittel rollbar. Es ist in diesem Zusammenhang offensichtlich, dass die Rollbarkeit die Aufbewahrung und den Transport des erfindungsgemäßen Mittels vorteilhaft beeinflusst. Das erfindungsgemäße Mittel, bspw. eine erfindungsgemäße Tapete, kann in langen Bahnen platzsparend aufgerollt und transportiert werden, ohne dass das Mittel bzw. die Tapete beschädigt wird. Es ist deshalb eine Ausführungsform des Mittels gemäß der vorliegenden Erfindung, dass der Schaum der durch das Aufrollen komprimiert wird, eine gute Rückstellfähigkeit besitzt. In einer weiteren Ausführungsform des Mittels gemäß der vorliegenden Erfindung bei der das Mittel eine Schaumschicht umfassend einen Schaum umfasst, ist deshalb vorgesehen, dass die Schaumschicht eine gute Rückstellfähigkeit aufweist. Eine Rückstellfähigkeit, wie hierin verwendet bezeichnet die Fähigkeit eines Schaumes nach Einwirkung einer Kraft auf den Schaum bzw. auf die Schaumschicht, wobei die Einwirkung der Kraft den Schaum bzw. die Schaumschicht deformiert in die räumliche Ausdehnung zurückzukehren, die der Schaum bzw. die Schaumschicht vor der Einwirkung der Kraft aufgewiesen hat. Im Zusammenhang mit dem erfindungsgemäßen Mittel ist eine gute Rückstellfähigkeit dann gegeben, wenn ein Schaum bzw. eine Schaumschicht bei einer Kompression auf 50% nach 0,5 h eine verbleibende Deformation von 0% bis 60%, bevorzugtererweise 25% bis 60%, bevorzugtererweise 50% aufweist. Alternativ dazu ist eine gute Rückstellfähigkeit dann gegeben, wenn ein Schaum bzw. eine Schaumschicht bei einer Kompression auf 50% nach 24 h einen Druckverformungsrest von 0% bis 50%, bevorzugterweise 15% bis 25% aufweist.

Ein Druckverformungsrest wie hierin verwendet bezeichnet bevorzugt einen Verformungsanteil und/oder eine bleibende Verformung der Schaumschicht. Zur Bestimmung des Druckverformungsrests wird bevorzugt die Stärke eines Pobenstücks eines erfindungsgemäßen Mittels bestimmt und anschließend das Pobenstück um 50% zusammengedrückt und für die angegebene Zeit um 50% zusammengedrückt gelagert. Nach der Entlastung, bevorzugterweise 30 Minuten nach der Entlastung, wird die Stärke des Pobenstücks bestimmt. Die Berechnung des Druckverformungsrestes erfolgt nach folgender Formel: DVR (%) = (L0 - L2) / (L0 - L1) x 100 %, wobei DVR bedeutet Druckverformungsrest in %, L0 bedeutet Stärke des Probenstücks vor der Prüfung, L1 bedeutet Stärke des Probenstücks während der Prüfung (Distanzstück), und L2 bedeutet Stärke des Probenstücks nach der Prüfung. Ein Fachmann wird anerkennen, dass bspw. ein Druckverformungsrest von 0% bedeutet, dass der Körper seine ursprüngliche Dicke wieder voll erreicht hat, und dass bspw. ein DVR von 100% bedeutet, dass der Körper während des Versuchs völlig verformt wurde und keine Rückstellfähigkeit besitzt.

Mineralische Bestandteile wie hierin verwendet umfassen bevorzugterweise Aluminium, Silizium, Magnesium und Kalzium. In einer Ausführungsform des erfindungsgemäßen Mittels umfassen Beschichtungen bevorzugterweise Aluminium, bevorzugterweise zu mehr als 10 Gew.-%, Silizium, bevorzugterweise zu mehr als 10 Gew.-%, Kalzium, bevorzugterweise zu mehr als 10 Gew.-%, und Magnesium, bevorzugterweise zu 0,1 bis 2 Gew.-%. In einer Ausführungsform des erfindungsgemäßen Mittels umfasst das Mittel eine Trägerschicht, die ein Glasvlies umfasst, das eine Beschichtung umfasst. In einer bevorzugten Ausführungsform des erfindungsgemäßen Mittels, umfasst die Beschichtung mineralische Bestandteile, bevorzugtererweise Aluminium, Silizium, Kalzium und Magnesium. In einer besonders bevorzugten Ausführungsform des erfindungsgemäßen Mittels, umfasst die Beschichtung mineralische Bestandteile. In diesem Fall umfasst die Trägerschicht bevorzugterweise Aluminium, bevorzugterweise zu mehr als 10 Gew.-%, Silizium, bevorzugterweise zu mehr als 10 Gew.-%, Kalzium, bevorzugterweise zu mehr als 10 Gew.-%, und Magnesium, bevorzugterweise zu 0,1 bis 2 Gew.-%.

Alle Angaben zu Stärken einer Schaumschicht hierin sind Angaben zu Stärken einer Schaumschicht in trockenem Zustand ohne Kleber.

In einer Ausführungsform des erfindungsgemäßen Mittels umfasst eine Trägerschicht ein Vlies, wobei das Vlies eine Beschichtung und/oder Ausrüstung aufweist. Beispielsweise kann eine Trägerschicht ein Glasvlies von 70 g/m² umfassen, das einseitig mit 240 g/m² Ausrüstmittel ausgerüstet ist, wobei das Glasvlies weiter bevorzugterweise ein Bindemittel umfasst. In diesem Zusammenhang ist zu beachten, dass sich die Angabe des Gewichtes des Ausrüstmittels auf dessen Trockenmasse bezieht. In einer Ausführungsform des erfindungsgemäßen Mittels umfasst die Trägerschicht ein Glasvlies mit einem Flächengewicht von 70 g/m², das einseitig mit 240 g/m² Ausrüstmittel ausgerüstet ist und wobei die Trägerschicht ein Gesamtgewicht von 300 bis 335 g/m² aufweist.

In einer Ausführungsform des erfindungsgemäßen Mittels ist eine Ausrüstung und/oder Beschichtung auf einer Seite oder auf beiden Seiten der Trägerschicht aufgebracht.
Dichte wie hierin verwendet bezeichnet bevorzugterweise das Raumgewicht eines Stoffes.
In einer Ausführungsform des erfindungsgemäßen Mittels, in der die Trägerschicht eine Dichte von 520 g/dm³ bis 550 g/dm³ aufweist weist es bevorzugterweise eine Stärke von 0,6 mm auf.

In einer Ausführungsform des erfindungsgemäßen Mittels, in der die Trägerschicht eine Dichte von 520 g/dm³ bis 550 g/dm³ aufweist weist es bevorzugterweise eine Stärke von 0,6 mm und ein Gewicht von 310-330 g/m²

In einer Ausführungsform des erfindungsgemäßen Mittels, in der die Trägerschicht eine Dichte von 520 g/dm³ bis 550 g/dm³ und eine Stärke von 0,6 mm und ein Gewicht von 310-330 g/m² aufweist weist der Schaum ein Raumgewicht von 200-290 g/dm³ auf.

In einer Ausführungsform des erfindungsgemäßen Mittels, in der die Trägerschicht ein Bindemittel umfasst wird das Bindemittel bei der Herstellung des Vlieses zugegeben. Genauer wird aus geschnittenen Fasern, bevorzugterweise Glasfasern, zusammen mit einem Bindemittel, bevorzugterweise Polyvinylalkohol, ein Vlies gefertigt und bevorzugterweise vorgetrocknet. In einem zweiten Schritt wird wahlweise eine Ausrüstung und/oder Beschichtung auf einer oder auf beiden Seiten aufgetragen und anschließend bevorzugterweise getrocknet.

In einer Ausführungsform des erfindungsgemäßen Mittels, in der das Mittel die Vertiefung eine Breite von bis zu 2,5 mm, bis zu 5 mm, oder bis zu 10 mm aufweist weist eine Oberfläche, die wenigstens eine Unebenheit, bevorzugterweise eine Vertiefung umfasst, bevorzugtererweise auf 50 bis 60% der Oberfläche keine Unebenheit auf. Eine Vertiefung zeichnet sich bevorzugterweise nicht auf der Oberfläche der erfindungsgemäßen Mittels ab. In einer Ausführungsform kann eine Vertiefung bis zu 200 mm tief sein. Die vorliegenden Erfinder nehmen an, ohne im Folgenden daran gebunden sein zu wollen, dass eine Tiefe einer Vertiefung bevorzugterweise keine Rolle für die Abdeckeigenschaften bzw. Glätteigenschaften des erfindungsgemäßen Mittels spielt. Es wird in diesem Zusammenhang angenommen, dass je tiefer eine Vertiefung ist desto besser die Abdeckeigenschaften bzw. Glätteigenschaften des erfindungsgemäßen Mittels sind, da ein Kleber nicht die Möglichkeit hat beim wegtrocknen das Mittel in die Vertiefung zu ziehen.

In einer Ausführungsform des erfindungsgemäßen Mittels hat eine Vertiefung einen maximalen Durchmesser von weniger als 50 bevorzugterweise weniger als 100mm.

In einer Ausführungsform des Verfahrens zum Glätten einer Oberfläche bezeichnet Streichen des Mittels bevorzugterweise ein Glattstreichen des Mittels und/oder ein mit Farbe Bestreichen des Mittels.

Ein Litergewicht wie hierin verwendet bezeichnet bevorzugterweise ein Gewicht, bevorzugterweise spezifisches Gewicht, eines Stoffes oder Stoffgemisches aus dem ein Schaum hergestellt wird.

In einer Ausführungsform des Verfahrens zur Herstellung eines Mittels zum Glätten von Unebenheiten einer Fläche ist ein Ofen bevorzugterweise ein Trockenofen von bevorzugtererweise etwa 18 m Länge. Ein Fachmann wird anerkennen, dass bei einer Produktionsgeschwindigkeit von 4 m/min bleibt ein Schaum etwa 4 ½ Minuten im Ofen verbleibt. In einer Ausführungsform verbleibt der Schaum, bevorzugterweise zur Endtrocknung, etwa 4 Minuten im Ofen. Ein Fachmann wird anerkennen, dass mit einem stärkeren IR Vortrockner Produktionsgeschwindigkeiten von 8 bis 10 m/min erreicht werden können.

In einer Ausführungsform des Mittels gemäß der vorliegenden Erfindung ist der Schaum ein Styrol und Butadien enthaltender Schaum. In einer weiteren Ausführungsform des Mittels gemäß der vorliegenden Erfindung enthält ein Styrol und Butadien enthaltender Schaum wenigstens einen Stoff der ausgewählt ist aus der Gruppe umfassend wenigstens einen Füllstoff, wenigstens einen Emulgator und wenigstens ein Vernetzungsmittel. In einer weiteren Ausführungsform des Mittels gemäß der vorliegenden Erfindung enthält ein Styrol und Butadien enthaltender Schaum jeweils einen Stoff aus der Gruppe bestehend aus einem Füllstoff, einem Emulgator und einem Vernetzungsmittel. In diesem Zusammenhang ist anzumerken, dass das Vorhandensein eines Emulgators die Schaumporenstruktur beeinflusst. Die Emulgatoren ermöglichen, dass bei dem Beschichtungsmittel Luft beigemischt werden kann. Als Emulgatoren werden im Stand der Technik über 10.000 unterschiedliche Stoffe eingesetzt und die Auswahl entsprechender Emulgatoren ist einem Fachmann geläufig. Ein Fachmann wird anerkennen, dass das Verhältnis von Styrol zu Butadien in einem Styrol und Butadien enthaltenden Schaum die Weichheit und die Härte des Schaumes bestimmt. Genauer bestimmt das Verhältnis der beiden Stoffe die Weichheit und Härte, wobei ein höherer Anteil an Butadien bevorzugterweise bedeutet, dass ein Schaum weicher ist und ein höherer Anteil an Styrol bevorzugterweise bedeutet, dass ein Schaum härter ist. Ein Fachmann wird des Weiteren anerkennen, dass je weicher ein Schaum ist, desto klebriger ist er. In einer Ausführungsform des Mittels gemäß der vorliegenden Erfindung, in der der Schaum ein Styrol-Butadien-Schaum ist, welcher ein Gewichtsverhältnis von Styrol zu Butadien von 48 zu 52 aufweist.

In einer Ausführungsform des erfindungsgemäßen Mittels enthält ein Schaum einen Füllstoff. Ein Füllstoff wie hierin verwendet bezeichnet bevorzugterweise einen Zusatzstoff oder ein Additiv, der/das das Volumen eines Stoffgemischs, bspw. des Schaums, erhöht, ohne dessen wesentlichen bzw. erwünschten Eigenschaften zu ändern. Ein Füllstoff wird einem Schaum meist aus Gründen der Senkung der Materialkosten zugesetzt. In einer Ausführungsform des Mittels gemäß der vorliegenden Erfindung kann ein Schaum zusätzlich zu einem Füllstoff oder anstelle eines Füllstoffes Aluminiumhydroxid umfassen. Ein Fachmann wird anerkennen, dass Aluminiumhydroxid die Flammschutzeigenschaften des Schaumes und damit bevorzugterweise des erfindungsgemäßen Mittels positiv beeinflusst. In einer weiteren Ausführungsform des Mittels gemäß der vorliegenden Erfindung können dem Schaum Füllstoffe wie bspw. Calciumcarbonat, insbesondere in Form von kohlensaurem Kalk, zugesetzt werden. Ein Fachmann wird jedoch anerkennen, dass ein Schaum, der Aluminiumhydroxid, jedoch keinen weiteren Füllstoff, insbesondere kein Calciumcarbonat enthält, als füllstofffreier Schaum deklariert werden kann und damit einer thermischen Verwertung zugeführt werden kann. In einer besonders bevorzugten Ausführungsform des Mittels gemäß der vorliegenden Erfindung enthält deshalb ein Schaum Aluminiumhydroxid und keinen Füllstoffe wie bspw. Calciumcarbonat.

Der Begriff der Oberfläche einer Wand, einer Decke eines Wandbelages oder eines Deckenbelages wie hierin verwendet, bezeichnet bevorzugterweise die Sichtseite, d.h. die einem Betrachter zugewandte Seite einer Wand, einer Decke eines Wandbelages oder eines Deckenbelages, bzw. die Seite, die dafür vorgesehen ist einem Betrachter zugewandt zu sein

Das "Glätten einer Oberfläche" wie hierin verwendet bezeichnet bevorzugterweise, dass die Oberfläche einer Wand, einer Decke, eines Wandbelages oder eines Deckenbelages, die wenigstens eine Unebenheit aufweist, geglättet wird, bevorzugterweise durch das erfindungsgemäße Mittel. Es wird jedoch verstanden werden, dass das erfindungsgemäße Mittel, wenn das erfindungsgemäße Mittel auf die Oberfläche, die wenigstens eine Unebenheit aufweist, aufgebracht ist, selbst eine Oberfläche besitzt. Die Oberfläche des erfindungsgemäßen Mittels ist bevorzugterweise glatt und wie hierin verwendet ist die Oberfläche des erfindungsgemäßen Mittels verschieden von der Oberfläche, die wenigstens eine Unebenheit aufweist und an die das erfindungsgemäße Mittel zum Glätten einer Oberfläche angebracht ist.

Es ist im Rahmen der vorliegenden Erfindung, dass zum Anbringen des Mittels gemäß der vorliegenden Erfindung eine vorhandene Oberfläche, die wenigstens eine Unebenheit aufweist, wie beispielsweise eine Strukturtapete, für eine neue Wandgestaltung auf der Wand verbleiben bzw. als solche weiterhin vorhanden sein kann. Insbesondere muss um die wenigstens eine Unebenheit zu beseitigen die zu glättende, wenigstens eine Unebenheit aufweisende Oberfläche nicht vorgespachtelt und/oder abgeschliffen werden. In einer Ausführungsform des Mittels gemäß der vorliegenden Erfindung ist das Mittel auf der Oberfläche mit wenigstens einer Unebenheit aufgebracht und das Mittel mit der Oberfläche mit wenigstens einer Unebenheit mittels eines Klebers, bevorzugterweise eines Tapetenklebers, bevorzugtererweise eines Tapeten-Dispersionsklebers auf wässriger Basis befestigt. Es wird in diesem Zusammenhang verstanden werden, dass Kleber bevorzugterweise handelsüblichen Kleister und handelsüblichen Tapetenkleister umfasst. Bevorzugterweise wird ein Kleber, mittels dessen das erfindungsgemäße Mittel auf der Oberfläche befestigt ist, nicht das erfindungsgemäße Mittel zersetzen und/oder verklumpen. In einer Ausführungsform des erfindungsgemäßen Mittels ist die Trägerschicht und die Schaumschicht nicht lösbar miteinander verbunden.

Die Erfinder nehmen an, ohne im Folgenden daran gebunden sein zu wollen, dass je mehr Luft dem Schaum, bevorzugterweise beim Schäumen, zugegeben wird, desto leichter sich die Schaumschicht vom Trägermaterial löst.

In einer Ausführungsform des erfindungsgemäßen Mittels umfasst der Schaum ein Biozid, ein Bakterizid und ein Fungizid. Ein Fachmann wird anerkennen, dass ein Biozid dem Schaum vorteilhafte Eigenschaften verleihen kann, indem ein Schaum bei einer Lagerung in einem Tank haltbarer ist. Ein Fachmann wird auch anerkennen, dass ein Bakterizid oder ein Fungizid dem Schaum vorteilhafte Eigenschaften verleihen kann, indem ein Bakterizid oder ein Fungizid, das einem Schaum zugegeben wird verhindert, dass bspw. zwischen Schaum und Oberfläche, die wenigstens eine Unebenheit aufweist, Schimmel und/oder Bakterien wachsen können.

In einer Ausführungsform des erfindungsgemäßen Mittels ist die Schaumschicht von der Trägerschicht zumindest teilweise gelöst ist, wenn das Mittel auf der Oberfläche, die wenigstens eine Unebenheit aufweist, aufgebracht ist. In einer weiteren Ausführungsform des erfindungsgemäßen Mittels ist die Schaumschicht von der Trägerschicht vollständig gelöst, wenn das Mittel auf der Oberfläche, die wenigstens eine Unebenheit aufweist, aufgebracht ist. In einer weiteren Ausführungsform des erfindungsgemäßen Mittels ist die Schaumschicht von der Trägerschicht nicht gelöst, wenn das Mittel auf der Oberfläche, die wenigstens eine Unebenheit aufweist, aufgebracht ist.

In einer Ausführungsform des erfindungsgemäßen Mittels ist vorgesehen, dass der Kleber zu weniger als 40% der Stärke der Schaumschicht, bevorzugterweise zu weniger als 30% der Stärke der Schaumschicht, bevorzugtererweise zu weniger als 20% der Stärke der Schaumschicht und bevorzugtesterweise zu weniger als 10% der Stärke der Schaumschicht in die Schaumschicht eindringt. In diesem Zusammenhang ist beachtlich, dass ein Schaum, der Kleber weniger gut aufnimmt aber dünner ist, u.U. zu der gleichen Abdeckeigenschaft der erfindungsgemäßen Tapete bzw. Eigenschaft der erfindungsgemäßen Tapete zu Glätten, führt wie eine Schaumschicht, die zwar Kleber etwas besser aufnimmt, jedoch eine größere Stärke aufweist. Demgemäß ist eine Durchtränkung der Schaumschicht mit Kleber angegeben als Prozent der durchtränkten Schaumstärke der Schaumschicht.

In einer Ausführungsform des erfindungsgemäßen Mittels umfasst die Schaumschicht einen Styrol-Butadien Schaum. Ein Styrol-Butadien Schaum wie hierein verwendet ist bevorzugterweise ein Copolymer aus 1,3-Butadien und Styrol. In einer Ausführungsform des erfindungsgemäßen Mittels sind in einem Styrol-Butadien Schaum die beiden polymerbildenden Monomere in einem Gewichtsverhältnis von 48 zu 52 enthalten. In diesem Zusammenhang wird ein Fachmann anerkennen, dass neben den beiden polymerbildenden Monomeren weitere Bestandteile in einem Styrol-Butadien Schaum enthalten sein können. Ein Fachmann wird auch anerkennen, dass die Mengenangaben von Styrol und/oder Butadien in einem Styrol-Butadien Schaum bevorzugterweise um +/- 10%, bevorzugtererweise um +/-5% schwanken können.

In einer Ausführungsform des erfindungsgemäßen Mittels umfasst ein Schaum als Treibmittel Kohlendioxid, bevorzugterweise reines Kohlendioxid.

In einer Ausführungsform des erfindungsgemäßen Mittels umfasst ein Schaum ein Vernetzungsmittel. In einer Ausführungsform des erfindungsgemäßen Mittels ist ein schwefelhaltiger Stoff bevorzugterweise Dischwefeldichlorid.

Ein Weichmacher wie hierin verwendet ist bevorzugterweise eine Verbindung, die einen Schaum weicher, flexibler, geschmeidiger und/oder elastischer macht und/oder dessen Härte und/oder Sprödigkeit verringert.

Ein Extender wie hierin verwendet ist bevorzugterweise ein sekundär Weichmacher, der bevorzugtererweise eine mäßige Polarität besitzen und daher in Abstimmung mit einem Weichmacher eingesetzt wird. Ein Extender wie hierin verwendet dient bevorzugterweise zur Verbesserung der Verarbeitung und/oder zur Verbilligung der Kunststoffformmasse

Ein Stabilisator wie hierin verwendet ist bevorzugterweise eine Verbindung, die der Verbesserung der chemischen Eigenschaften eines Schaumes dient. Ein Stabilisator erhöht bevorzugterweise die Lebensdauer des Schaumes und/oder schützt den Schaum vor schädigenden Einflüssen, wie bspw. Oxidation, Strahlung und Wärme.

Ein Verstärkungsstoff wie hierin verwendet ist bevorzugterweise ein anorganischer oder organischer Zusatzstoff, der die Matrix eines Schaumes verstärkt. Unter Verstärkung ist hierbei bevorzugt die Verbesserung mechanischer und physikalischer Eigenschaften, wie Biegefestigkeit, Kriechmechanik und Wärmeformbeständigkeit zu verstehen.

Eine Faserlänge wie hierin verwendet ist bevorzugterweise eine mittlere Faserlänge. Ein Wert der für eine Faserlänge hierin angegeben ist, wie bspw. eine Faserlänge von 10 µm bis 11 µm bezeichnet bevorzugterweise die Faserlänge der in einer Schicht und/oder einem Material wie einem Vlies und/oder einer Vliesschicht tatsächlich enthaltenen Fasern mit einer Genauigkeit von +/- 10%.

Aussagen zu Faserlängen, sofern nicht anders angegeben gelten für alle Fasern und deren Längen, insbesondere auch für die Faserlängen in der ersten und in der zweiten Vliesschicht. In einer Ausführungsform des erfindungsgemäßen Mittels kann eine jede in dem Mittel enthaltene Vliesschicht verfestigt sein. In einer Ausführungsform des erfindungsgemäßen Mittels ist eine Vliesschicht die verfestigt ist thermisch, mechanisch oder chemisch verfestigt. Ein Acrylatbinder wie hierin verwendet ist bevorzugterweise eine Emulsion von Acrylat-Copolymeren, wie bspw. Ethylacrylat, Butylacrylat und/oder Ethylacrylat, sowie Acrylnitril, mit einer Mindest-Filmbildetemperatur bevorzugterweise unter 1 °C und einer Glasübergangstemperatur bevorzugterweise unter 0 °C. Ein Fachmann wird anerkennen, dass Acrylat-Binder bevorzugterweise unter anderem als thermoplastische Bindemittel eingesetzt werden, um eine gute Bedruckbarkeit, Wasserundurchlässigkeit und eine hohe trockene Reibechtheit zu erreichen.

Die Erfindung wird im Folgenden anhand der Figuren und Beispiele weiter erläutert, aus denen sich weitere Vorteile, Ausführungsformen und Merkmale der Erfindung ergeben.
- Fig. 1A: ist ein Kraft-Durchbiegungs-Diagramm, das die Ergebnisse des gemäß Beispiel 1 durchgeführten Biegetests für Trägermaterial 1 zeigt;
- Fig. 1B: ist ein Kraft-Durchbiegungs-Diagramm, das die Ergebnisse des gemäß Beispiel 1 durchgeführten Biegetests für Trägermaterial 2 zeigt;
- Fig. 1C: ist ein Kraft-Durchbiegungs-Diagramm, das die Ergebnisse des gemäß Beispiel 1 durchgeführten Biegetests für Trägermaterial 3zeigt;
- Fig. 1D: ist ein Kraft-Durchbiegungs-Diagramm, das die Ergebnisse des gemäß Beispiel 1 durchgeführten Biegetests für Trägermaterial 4 zeigt;
- Fig. 2A: ist eine schematische Darstellung des Aufbaus zur Durchführung des in Beispiel 1 beschriebenen Drucktests;
- Fig. 2B: ist eine schematische Darstellung des Aufbaus zur Durchführung des in Beispiel 1 beschriebenen Zugtests;
- Fig. 3: ist ein Diagramm, das die Verformung über die Zeit von Tapete 1 im Rahmen des gemäß Beispiel 1 durchgeführten Zugtests zeigt;
- Fig. 4: ist ein Diagramm, das die Kraft über die Zeit von Tapete 1 im Rahmen des gemäß Beispiel 1 durchgeführten Zugtests zeigt;
- Fig. 5: ist ein Diagramm, das die Verformung über die Zeit von Tapete 8 im Rahmen des gemäß Beispiel 1 durchgeführten Drucktests zeigt;
- Fig. 6: ist ein Diagramm, das die Kraft über die Zeit von Tapete 8 im Rahmen des gemäß Beispiel 1 durchgeführten Drucktests zeigt;
- Fig. 7: ist ein Diagramm, das die Verformung über die Zeit von Tapete 9 im Rahmen des gemäß Beispiel 1 durchgeführten Zugtests zeigt;
- Fig. 8: ist ein Diagramm, das die Kraft über die Zeit von Tapete 9 im Rahmen des gemäß Beispiel 1 durchgeführten Zugtests zeigt;
- Fig. 9: ist ein Diagramm, das die Verformung über die Zeit von Tapete 9 im Rahmen des gemäß Beispiel 1 durchgeführten Drucktests zeigt;
- Fig. 10: ist ein Diagramm, das die Kraft über die Zeit von Tapete 9 im Rahmen des gemäß Beispiel 1 durchgeführten Drucktests zeigt;
- Fig. 11: ist ein Diagramm, das die Verformung über die Zeit von Trägermaterial 1 (Tapete Nr. 66000) im Rahmen des gemäß Beispiel 1 durchgeführten Drucktests zeigt;
- Fig. 12: ist ein Diagramm, das die Kraft über die Zeit von Trägermaterial 1 (Tapete Nr. 66000) im Rahmen des gemäß Beispiel 1 durchgeführten Drucktests zeigt; und
- Fig. 13: ist eine schematische Darstellung, die ein erfindungsgemäßes Mittel auf einer Oberfläche zeigt, die wenigstens eine Unebenheit aufweist, wobei die wenigstens eine Unebenheit aufweisende Oberfläche geglättet wird.

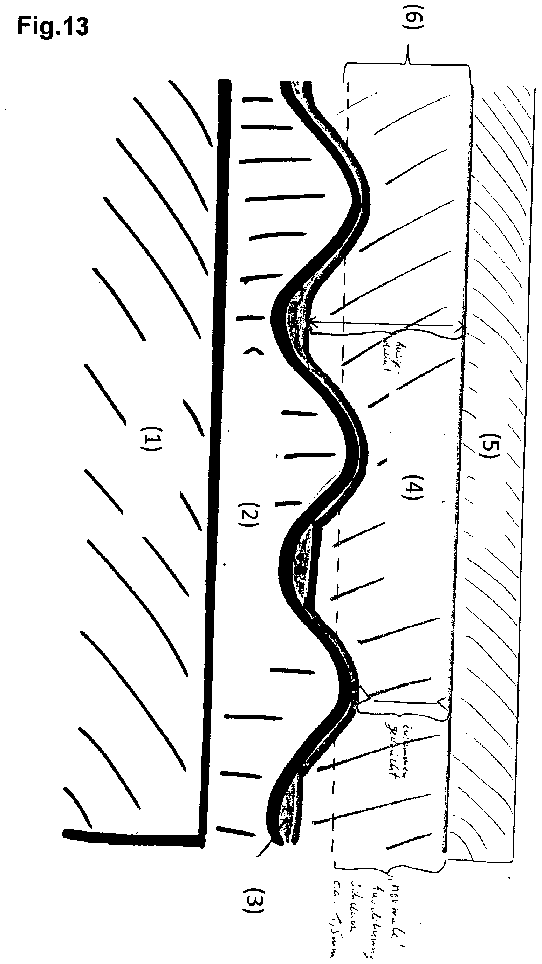

Genauer zeigt Figur 13 wie ein an einer Wand oder Decke (1) angebrachte Oberfläche, die wenigstens eine Unebenheit aufweist (2), hier dargestellt als eine wellige Strukturtapete mittels eines Klebers (3) mit dem erfindungsgemäßen Mittel umfassend eine Schaumschicht (4) und eine Trägerschicht (5) abgedeckt bzw. geglättet wird. Es kann daraus unmittelbar gesehen werden, dass die Schaumschicht, die eine Stärke (6) besitzt durch den Kleber (3) in die Vertiefung gezogen und an diesen Stellen gedehnt wird bzw. auf Hochpunkten gedrückt bzw. gestaucht wird.

### Beispiele

### Beispiel 1: Charakterisierung von Tapeteneigenschaften - Tests

### Bestimmung der Biegeeigenschaften: Biegetest

Der hierin beschriebene Biegetest kann zur Charakterisierung einer Tapete verwendet werden, um zu bestimmen, ob ein Trägermaterial zur Verwendung als Trägerschicht einer erfindungsgemäßen Tapete geeignet ist.

Zur Bestimmung der Biegeeigenschaften der erfindungsgegenständlichen Tapete wurde ein Biegetest in Anlehnung an Norm DIN EN ISO 178, Ausgabe 06.2004, wie im Folgenden erläutert durchgeführt

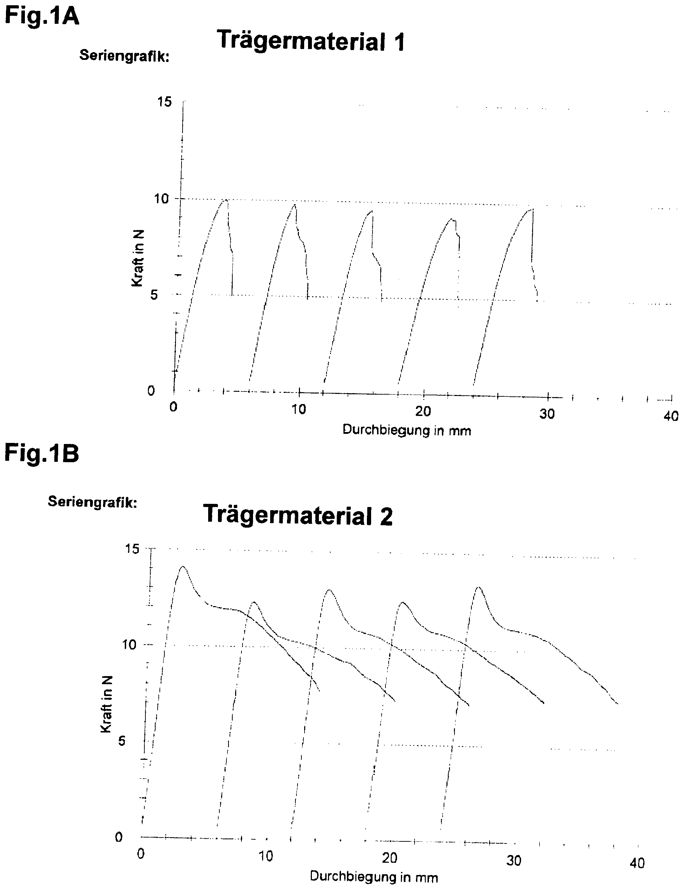

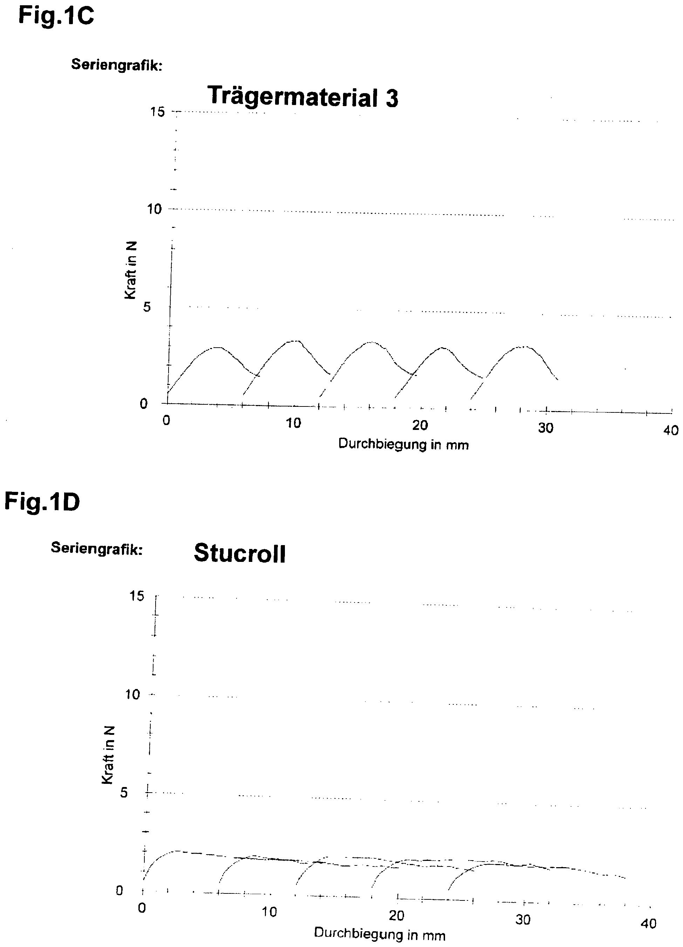

Ein Probestück des jeweiligen zu testenden Trägermaterials wurde auf zwei Auflager positioniert und in der Mitte mit einer Druckfinne belastet. Das Probestück wurde hierbei in Längsrichtung, d.h. in Rollrichtung, und mit der oberen Seite, d.h. der Sichtseite des Trägermaterials, zur Druckfinne geprüft, indem das zu prüfende Probestück, genauer ein Probestück des zu prüfenden Trägermaterials, auf einer Prüfvorrichtung durch eine Druckfinne durch eine Universalprüfmaschine, genauer Zwick 050 mit Traverse und mit 1KN Kraftmeßdose, belastet wurde, bis die Vorkraft erreicht war. Anschließend wurde das Probestück mit einer definierten Kraft beaufschlagt und die sich dabei ergebene Durchbiegung ermittelt. Der Ausdruck "max. Kraft" bedeutet hierbei welche Kraft bzw. welches Gewicht die Tapetenprobe aufnehmen konnte. Bei der max. Kraft konnte noch eine Durchbiegung ermittelt werden. Es ist zu beachte, dass die Angabe, dass eine Kraft von 5N nicht mehr aufgenommen werden konnte, in diesem Zusammenhang bedeutet, dass sich das Probenstück bei der Kraftbeaufschlagung zwischen den Auflagern durchdrückte. Keines der getesteten Probenstücke zerbrach, da diese flexibel sind. Es wird jedoch verstanden werden, dass es in einem solchen Fall nicht mehr möglich ist ein Gewicht von mehr als 5 N , bspw. 10 N zu testen. Weiter bedeutet die Angabe "-", dass für den entsprechenden Wert kein Messwert vorhanden ist, da das Probestück die angegebene Kraft keinen Widerstand entgegensetzen konnte. Der Biegeversuch ist grundsätzlich bevorzugterweise eine Methode der zerstörenden Werkstoffprüfung, weshalb für jede dem Biegetest unterworfene Tapete oder jedes dem Biegetest unterworfene Trägermaterial der hierin beschriebene Biegetest fünf Mal mit jeweils einem separaten Probestück durchgeführt wurde. Demgemäß bezeichnet "Nr." im Folgenden die Wiederholung des Biegetests an jeweils gleichgroßen Probestücken der entsprechenden Tapete. Die Figuren 1A, 1B, 1C und 1D zeigen jeweils durch den Biegetest erhaltene Kraft-Durchbiegungs-Diagramme für jeweils ein getestetes Trägermaterial. Ein Kraft-Durchbiegungs-Diagramm ist ein Diagramm, welches für ein angegebenes Material bei einer definierten Stützweite die Durchbiegung in mm bei Aufbringen einer Kraft über einen Kraftbereich in N darstellt.

Der Radius der Auflager betrug 2 mm. Die Stützweite betrug 25 mm.

Weitere Parameter des hierin verwendeten Biegetests waren:

| | |
|---|---|
| Kraftaufnehmer: | 1000 N; |
| Wegaufnehmer: | Traverse; |
| Probenhalter: | 3PBZ-Einrichtung (3-Punkt-Biege-Zug Einrichtung); |
| Vorkraft: | 0,5 N; und |
| Prüfgeschwindigkeit: | 5 mm/min. |

### Bestimmung der Druckeigenschaften: Drucktest

Der hierin beschriebene Drucktest kann zur Charakterisierung einer Tapete verwendet werden, um zu bestimmen, ob eine Tapete zum Glätten einer Oberfläche geeignet ist, wobei die Oberfläche wenigstens eine Unebenheit aufweist.

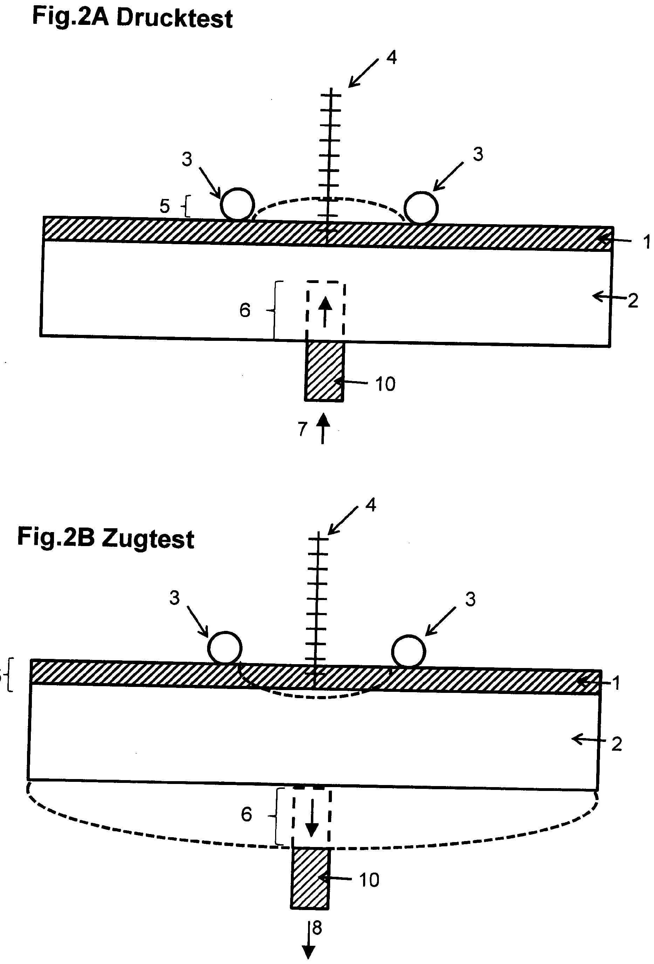

Fig.2A zeigt den schematischen Aufbau zur Durchführung des Drucktests. Im Rahmen der Durchführung des Drucktests wurden Probestücke der jeweils zu testenden Tapete, genauer die Trägerseite (1) der jeweils zu testenden Tapete an zwei Auflager (3) mit einer Stützweite von 10 mm fixiert und von unten in der Mitte der Schaumschicht (2) mit einem fahrbaren Auflager (10) mit fixiert. Die Radien der Auflager betragen fünf mm, der Radius des fahrbaren Auflagers beträgt fünf mm.

Anschließend wurde das fahrbare Auflager (10) mit einer Prüfgeschwindigkeit von 0,5 mm/min orthogonal 1 mm aufwärts bewegt. Dabei wurde eine Kraft von 0 - 5,0 N ermittelt. Zeitgleich wurde anhand eines Wegaufnehmers (4) die Verformung (5) des Probenstückes in mm gemessen.

Die Prüfgeschwindigkeit betrug 0,5 mm/min. Um eine Verformung von 1mm zu erreichen benötigte man 2 min. Anhand des Diagramms kann man erkennen, dass die Prüfgeschwindigkeit gleichmäßig war.

### Bestimmung der Zugeigenschaften: Zugtest

Der hierin beschriebene Zugtest kann zur Charakterisierung einer Tapete verwendet werden, um zu bestimmen, ob eine Tapete zum Glätten einer Oberfläche, wobei die Oberfläche wenigstens eine Unebenheit aufweist geeignet ist.

Fig.2A zeigt den schematischen Aufbau zur Durchführung des Drucktests. Im Rahmen der Durchführung des Drucktests wurden Probestücke der jeweils zu testenden Tapete, genauer die Trägerseite (1) der jeweils zu testenden Tapete unter zwei Auflager (3) mit einer Stützweite von 10 mm fixiert und von unten in der Mitte der Schaumschicht (2) mit einem fahrbaren Auflager (10) mit fixiert. Die Radien der Auflager betragen fünf mm, der Radius des fahrbaren Auflagers beträgt fünf mm.

Anschließend wurde das fahrbare Auflager (10) mit einer Prüfgeschwindigkeit von 0,5 mm/min orthogonal 1 mm abwärts bewegt. Dabei wurde eine Kraft von 0 - 2,9N ermittelt. Zeitgleich wurde anhand eines Wegaufnehmers (4) die Verformung (5) des Probenstückes in mm gemessen.

### Bestimmung der Rollbarkeit - Rollbarkeitstest

Die hierin beschriebene Bestimmung der Rollbarkeit kann zur Charakterisierung einer Tapete verwendet werden, um zu bestimmen, ob eine Tapete rollbar ist.

Um zu bestimmen, ob eine erfindungsgegenständliche Tapete und/oder das verwendete Trägermaterial rollbar ist wurden Probestücke von Tapeten, bzw. von Trägermaterial auf eine Wickelwelle bei einem Anfangswickeldurchmesser von 50 mm aufgerollt.

In diesem Zusammenhang ist zu beachten, dass mit zunehmender Anzahl der Durchgeführten Wicklungen bzw. Umdrehungen der Wickelwelle sich der Rollendurchmesser vergrößert. Für den wie oben hierin beschriebenen Rollbarkeitstest ist deshalb bevorzugt die Begutachtung der ersten 10 Wicklungen entscheidend. Es werden Probenstücke mit einer Breite von 1 m gewickelt. Die Tapete wurde vor Durchführung des Test mehrer Tage gelagert, da später eine Tapete solange gerollt gelagert wird bis sie verklebt wird. Es wurde maschinell ausgewickelt.

Nach dem Abrollen der Tapeten von der Wickelwelle wurde die dem Rollbarkeitstest unterzogene Tapete einer ersten Begutachtung unterzogen. Hierzu wurde die Sichtseite und die Rückseite hinsichtlich dem Auftreten von Rissen, Brüchen, oder sonstigen Beschädigungen oder Beeinträchtigungen durch in Augenscheinnahme untersucht und bewertet.

Um Schäden, die beim hierin beschriebenen Rollbarkeitstest auftraten, weiter zu untersuchen wurden die Tapeten und die Trägermaterialien verklebt und gestrichen.

Anschließend wurden die Tapeten einer zweiten Begutachtung unterzogen. Hierzu wurde die Sichtseite hinsichtlich des Auftretens von Rissen, Brüchen, oder sonstigen Beschädigungen oder Beeinträchtigungen durch in Augenscheinnahme untersucht und bewertet.

Eine Tapete gilt als rollbar, wenn sich die Tapete gemäß der hierin beschriebenen Bestimmung der Rollbarkeit auf eine Wickelwelle aufrollen lässt und sowohl bei der ersten Begutachtung als auch bei der zweiten Begutachtung keine Risse, Brüche, oder sonstige Beschädigungen oder Beeinträchtigungen aufweist.

### Beispiel 2: Ergebnisse des Biegetests für Probestücke von verschiedenen Trägermaterialien

Die Probestücke von den folgenden Trägermaterialien wurden dem in Beispiel 1 beschriebenen Biegetest unterzogen:
Dies waren Glasfaservliestapeten "Trägermaterial 1" und "Trägermaterial 2", sowie die aus dem Stand der Technik bekannte Tapete "Trägermaterial 3", genauer das Produkt Roll Enduit der Firma RLdecor und die aus dem Stand der Technik bekannte Tapete "Trägermaterial 4", genauer Abdecktapete der Firma Stucroll.

Das Trägermaterial 1 ist ein Glasvlies mit einer mineralischen Beschichtung. Das Trägermaterial 1 hat einer Stärke von 0,6 mm und ein Gewicht von 300-330 g/m², wobei die Faserlänge der Glasfasern 6 mm betragen und die Glasfasern einen Faserdurchmesser von 10 bis 11 µm aufweisen, und wobei die Orientierung von Glasfasern in dem Glasvlies zufällig ist. Trägermaterial 1 enthält Aluminium, Silizium und Kalzium zu mehr als 10 Gew.-% und 0,1 bis 2 Gew.-%. Magnesium. Das Trägermaterial 1 hat ein Raumgewicht von 520-550 g/dm³

Abweichend von DIN EN ISO 178 (06.2004) wurde anstatt von Kunststoffen, Tapeten, genauer die zu testenden Trägermaterialen "Trägermaterial 1" und "Trägermaterial 2", sowie die aus dem Stand der Technik bekannte Tapete "Trägermaterial 3" und Abdecktapete "Trägermaterial 4" geprüft und der Radius der Druckfinne betrug 2 mm, statt 5 mm.

Die Breite des Probestücks betrug 50 mm unabhängig von der Stärke bzw. Materialdicke der getesteten Tapeten. Die Stärke bzw. Dicke der getesteten Tapeten war 0,55 mm für Trägermaterial 1; 1,14 mm für Trägermaterial 2; 0,50 mm für Trägermaterial 3; und 1,08 mm für Trägermaterial 4.

Die Ergebnisse des Biegetests für verschiedene Trägermaterialien sind in Tabelle 1 dargestellt.

**Tabelle 1: Ergebnisse des Biegetests**

| **Trägermaterial 1** | | | | | | |
|---|---|---|---|---|---|---|
| **Nr.** | **max.Kraft in N** | **Weg bei max.Kraft in mm** | **Weg bei 1 N in mm** | **Weg bei 5 N in mm** | **Weg bei 10 N in mm** | **Bruch** |
| 1 | 9,96 | 3,69 | 0,16 | 1,27 | - | Ja |
| 2 | 9,82 | 3,22 | 0,14 | 1,21 | - | Ja |
| 3 | 9,55 | 3,46 | 0,16 | 1,29 | - | Ja |
| 4 | 9,19 | 3,82 | 0,17 | 1,45 | - | Ja |
| 5 | 9,83 | 4,35 | 0,16 | 1,39 | - | Ja |
| | | | | | | |

| **Trägermaterial 2** | | | | | | |
|---|---|---|---|---|---|---|
| **Nr.** | **max.Kraft in N** | **Weg bei max.Kraft in mm** | **Weg bei 1 N in mm** | **Weg bei 5 N in mm** | **Weg bei 10 N in mm** | **Bruch** |
| 1 | 14,09 | 2,67 | 0,10 | 0,72 | 1,46 | Nein |
| 2 | 12,32 | 2,43 | 0,10 | 0,76 | 1,58 | Nein |
| 3 | 13,02 | 2,44 | 0,09 | 0,72 | 1,50 | Nein |
| 4 | 12,44 | 2,42 | 0,09 | 0,74 | 1,54 | Nein |
| 5 | 13,33 | 2,48 | 0,10 | 0,73 | 1,50 | Nein |
| | | | | | | |

| **Trägermaterial 3** | | | | | | |
|---|---|---|---|---|---|---|
| **Nr.** | **max.Kraft in N** | **Weg bei max.Kraft in mm** | **Weg bei 1 N in mm** | **Weg bei 5 N in mm** | **Weg bei 10 N in mm** | **Bruch** |
| 1 | 2,98 | 3,91 | 0,56 | - | - | Ja |
| 2 | 3,38 | 4,18 | 0,49 | - | - | Ja |
| 3 | 3,39 | 4,08 | 0,50 | - | - | Ja |
| 4 | 3,18 | 3,59 | 0,52 | - | - | Ja |
| 5 | 3,30 | 4,40 | 0,50 | - | - | Ja |
| | | | | | | |

| **Trägermaterial 4** | | | | | | |
|---|---|---|---|---|---|---|
| **Nr.** | **max.Kraft in N** | **Weg bei max.Kraft in mm** | **Weg bei 1 N in mm** | **Weg bei 5 N in mm** | **Weg bei 10 N in mm** | **Bruch** |
| 1 | 2,08 | 2,50 | 0,33 | - | - | Nein |
| 2 | 1,96 | 2,67 | 0,37 | - | - | Nein |
| 3 | 2,06 | 3,94 | 0,41 | - | - | Nein |
| 4 | 2,10 | 6,76 | 0,38 | - | - | Nein |
| 5 | 1,91 | 3,15 | 0,46 | - | - | Nein |

Es ist zu beachten, dass dasTrägermaterial 4 nicht gebrochen ist, da es sich ohne Bruch verformen ließ und zwischen den Auflagern 25mm Breite durchgedrückt werden konnte ohne zu brechen.

Eine statistische Zusammenfassung der Ergebnisse ist in Tabelle 2 dargestellt.

**Tabelle 2: Statistik der Ergebnisse des Biegetests gemäß Norm DIN ISO 178 (06.2004)**

| **Prüfung** | **Mittelwert χ** | **Standardabweichung s** | **Variationskoeffizient v in %** |
|---|---|---|---|
| | | | |

| **Material: Trägermaterial 1** | | | |
|---|---|---|---|
| Max.Kraft in N | **9,67** | **0,31** | **3,16** |
| Durchbiegung bei max. Kraft in mm | **3,71** | **0,43** | **11,54** |
| Durchbiegung bei 1 N in mm | **0,16** | **0,01** | **6,25** |
| Durchbiegung bei 5 N in mm | **1,32** | **0,10** | **7,48** |
| Durchbiegung bei 10 N in mm | - | - | - |
| | | | |

| **Material: Trägermaterial 2** | | | |
|---|---|---|---|
| Max.Kraft in N | 13,04 | 0,72 | 5,52 |
| Durchbiegung bei max. Kraft in mm | 2,49 | 0,10 | 4,13 |
| Durchbiegung bei 1 N in mm | 0,09 | 0,00 | 3,22 |
| Durchbiegung bei 5 N in mm | 0,74 | 0,02 | 2,59 |
| Durchbiegung bei 10 N in mm | 1,52 | 0,05 | 3,01 |
| | | | |

| **Material: Trägermaterial 3** | | | |
|---|---|---|---|
| Max.Kraft in N | 3,25 | 0,17 | 5,36 |
| Durchbiegung bei max. Kraft in mm | 4,03 | 0,31 | 7,59 |
| Durchbiegung bei 1 N in mm | 0,51 | 0,02 | 4,82 |
| Durchbiegung bei 5 N in mm | - | - | - |
| Durchbiegung bei 10 N in mm | - | - | - |
| | | | |

| **Material: Trägermaterial 4** | | | |
|---|---|---|---|
| Max. Kraft in N | 2,02 | 0,08 | 4,21 |
| Durchbiegung bei max. Kraft in mm | 3,81 | 1,75 | 45,86 |
| Durchbiegung bei 1 N in mm | 0,39 | 0,05 | 12,43 |
| Durchbiegung bei 5 N in mm | - | - | - |
| Durchbiegung bei 10 N in mm | - | - | - |

Bei einer Kraft von 1 N betrug die Durchbiegung bei Probestücken der Tapete "Trägermaterial 1" und bei Probestücken der Tapete "Trägermaterial 2", 0,16 bzw. 0,09mm; bei Probestücken der Tapete "Trägermaterial 3" und bei Probestücken der Abdecktapete "Trägermaterial 4" betrug die Durchbiegung 0,51 bzw. 3,81 mm.

Das Trägermaterial 1 nimmt eine Kraft von 10N in Längsrichtung auf und biegt sich dabei 2,44 mm durch.

Bei einer Kraft von 5 N betrug die Durchbiegung bei Probestücken der Tapete "Trägermaterial 1" und bei Probestücken der Tapete "Trägermaterial 2", 1,32 bzw. 0,74 mm; bei Probestücken der Tapete "Trägermaterial 3" und bei Probestücken der Abdecktapete "Trägermaterial 4" brachen die Probestücke bei einer Kraft von 5 N.

Genauer wurde für Probestücke der Tapete Trägermaterial 1 eine maximale Kraft von 9,67 N, für Probestücke der Tapete "Trägermaterial 2" eine maximale Kraft von 13,04 N ermittelt, wohingegen die mittels des hierin beschriebenen Biegetests ermittelte maximale Kraft für Probestücke der Tapete "Trägermaterial 3" lediglich 3,25 N und für Probestücke der Abdecktapete "Trägermaterial 4" lediglich 2,02 N betrug.

Die im Rahmen des Biegetests erhaltenen Kraft-Durchbiegungs-Diagramme sind in Fig.1A für Probestücke der Tapete "Trägermaterial 1"; in Fig. 1B für Probestücke der Tapete "Trägermaterial 2"; in Fig.1C für Probestücke der Tapete "Trägermaterial 3"; und in Fig.1D für Probestücke der Abdecktapete "Trägermaterial 4" dargestellt. Hierbei wurden Prüfwerte, soweit Nonnen dies vorschreiben, mit der diesen Normen entsprechenden Genauigkeit angegeben. Für statistische Auswertungen wurden alle gemessenen 5 Probestücke der jeweiligen Tapete verwendet.

Genauer zeigen die Figs. 1A bis 1D die Ergebnisse des gemäß Beispiel 1 durchgeführten Biegetests als Seriengrafik von Kraft-Durchbiegungs-Diagrammen. Hierzu wurde die Kraft ausgedrückt in N über der Durchbiegung ausgedrückt in mm aufgetragen. Es wurden jeweils 5 Probenstücke wie in Beispiel 1 beschrieben vermessen. Fig. 1A zeigt ein Kraft-Durchbiegungs-Diagramm, das die Ergebnisse des gemäß Beispiel 1 durchgeführten Biegetests für 5 Probestücke der Tapete "Trägermaterial 1" zeigt; Fig. 1B zeigt ein Kraft-Durchbiegungs-Diagramm, das die Ergebnisse des gemäß Beispiel 1 durchgeführten Biegetests für 5 Probestücke der Tapete "Trägermaterial 2" zeigt; Fig. 1C zeigt ein Kraft-Durchbiegungs-Diagramm, das die Ergebnisse des gemäß Beispiel 1 durchgeführten Biegetests für 5 Probestücke der Tapete "Trägermaterial 3" zeigt; und Fig. 1D zeigt ein Kraft-Durchbiegungs-Diagramm, das die Ergebnisse des gemäß Beispiel 1 durchgeführten Biegetests für 5 Probestücke der Abdecktapete "Trägermaterial 4" zeigt.

### Beispiel 3: Herstellung von Tapeten ausgehend von "Trägermaterial 1"

Ausgehend von dem in Beispiel 2 näher beschriebenen Trägermaterial 1 wurden 11 verschiedene Tapeten hergestellt, die im Folgenden als Tapeten "Muster 1" bis "Muster 11" bezeichnet werden.

"Muster 1" bis "Muster 11" unterscheiden sich insbesondere durch Schaumgewicht und Schaumdicke. Das Schaumgewicht beträgt 200g/dm³ bis 150g/dm³ und die Dicke bzw. Stärke am Messerrakel variiert zwischen den Mustern von 1,5 bis 2,0 mm. Außerdem wurden zwei Rezepturen mit einem hohen und einem niedrigen Anteil an Aluminiumhydroxyd verwendet. Die Musterproben "Muster 5", "Muster 8", "Muster 9" und "Muster 11" wurden an eine Wand verklebt, die eine Oberfläche eines Glasgewebes mit einem Fischgrätmuster aufweist. Beid diesem Verklebetest wurden alle Muster für gut befunden. Die Fischgrätstruktur zeichnete sich bei keiner der Muster mehr durch.

Alle Tapeten "Muster 1" bis "Muster 11" basieren auf dem Trägermaterial 1, wobei in "Muster 9", "Muster 10" und "Muster 11" die zweite Seite der Trägerschicht zusätzlich eine Beschichtung aufweist, wobei die Beschichtung eine Polymermischung umfasst. Genauer wurde einseitig mit einem Walzenrakel ca. 150-170g/m² Ausrüstungsmittel GA3008/11 von Schill und Seilacher aufgetragen. Hierbei handelt es sich um eine Pigmentdispersion zur Herstellung mattweißer Beschichtungen. Die Dispersion ist eine Polymermischungen auf Acrylat und Copolymer Basis mit Titandioxyd und Weißpigmenten. Das Ausrüstungsmittel versiegelt die damit behandelte Oberfläche.

Durch die Beschichtung ist eine glatte Oberfläche und damit eine bessere Überstreichbarkeit und eine bessere Deckkraft gewährleistet.

Alle Tapeten "Muster 1" bis "Muster 11" wurden mit Schäumen, Materialien und Methoden gemäß Tabelle 3 hergestellt.

Die beiden verwendeten Schäume sich in dem Anteil von Aluminiumhydroxyd unterscheiden. Im Mittel VP25017 ist die Hälfte an Aluminiumhydroxyd enthalten wie im Produkt VP25016.

Dabei wurde auf das Trägermaterial 1 ein Schaum aufgetragen. Der Schaum wurde mittels eines mechanischen Schaumschlagverfahrens / Aufschäumanlage durch Einschlagen oder Einblasen von Luft/Gas schaumig geschlagen. Das ursprüngliche Litergewicht das zur Herstellung des Schaumes verwendeten Ausgangsmaterials von 1.000 - 1.100 g/dm³ wurde dabei auf 150-250g/dm³ durch gleichmäßiges einbringen von Luft verringert. Die so mit Luft/Gas versetzte Masse wurde mittels eines handelsüblichen Walzenrakels in einer gleichmäßigen Stärke. Der so aufgetragene Schaum wurde mit einem IR-Feld vorgetrocknet und anschließend in einem Ofen bei einer Temperatur von 140-160°C endgetrocknet. Hierbei wurde eine IR-Leistung von 12KW verwendet. Zum Trocknen wird ein Warmluftofen verwendet - Ein Fachmann wird anerkennen, dass Kontaktwänne nicht eingesetzt werden kann.

Ein Fachmann wird auch anerkennen, dass die Drehzahl des Mixkopfes, die Verweilzeit im Mixkopf und die Mixkopftemperatur sowie die Luftmenge, die zugegeben wird, variabel sind und entsprechend den Anforderungen des herzustellenden Schaums und damit der Schaumschicht im Rahmen von Routinemaßnahmen eingestellt werden.

Zur Herstellung der erfindungsgemäßen Tapete wurde ein Schaummixer, kontinuierlicher Belüfter, der Fa. Hansa Typ Top-Mix Compact 200 eingesetzt.

**Tabelle 3: Herigestellte Mustertapeten**

| **Versuche Ausrüstung Flockanlage mit Messerrakel** | | | | | | | | | | | |
|---|---|---|---|---|---|---|---|---|---|---|---|
| | **Muster 1** | **Muster 2** | **Muster 3** | **Muster 4** | **Muster 5** | **Muster 6** | **Muster 7** | **Muster 8** | **Muster 9** | **Muster 10** | **Muster 11** |
| Trägermaterial (TM) | #1 | #1 | #1 | #1 | #1 | #1 | #1 | #1 | **#1 + GA300 8/11** | **#1 + GA300 8/11** | **#1 + GA30 08/11** |
| Beschichtungsmittel/ Ausrüstungsmittel | **VP 25016** | **VP 25016** | **VP 25016** | **VP25 016** | **VP25 016** | **VP25 016** | **VP25 017** | **VP2 5017** | **VP250 17** | **VP250 17** | **VP25 016** |
| Lieferant | Synthomer | Synthomer | Synthomer | Synthomer | Synthomer | Synthomer | Synthomer | Synthomer | Synthomer | Synthomer | Synthomer |
| Mit Schäumer | Hansa Mixer Top-Mix Maschinen Nr. 40327 Bj. 2011 | Hansa Mixer Top-Mix Maschinen Nr. 40327 Bj. 2011 | Hansa Mixer Top-Mix Maschinen Nr. 40327 Bj. 2011 | Hansa Mixer Top-Mix Maschinen Nr. 40327 Bj. 2011 | Hansa Mixer Top-Mix Maschinen Nr. 40327 Bj. 2011 | Hansa Mixer Top-Mix Maschinen Nr. 40327 Bj. 2011 | Hansa Mixer Top-Mix Maschinen Nr. 40327 Bj. 2011 | Hans a Mixe r Top-Mix Maschine n Nr. 40327 Bj. 2011 | Hansa Mixer Top-Mix Maschinen Nr. 40327 Bj. 2011 | Hansa Mixer Top-Mix Maschinen Nr. 40327 Bj. 2011 | Hansa Mixer Top-Mix Maschinen Nr. 40327 Bj. 2011 |
| Schaumgewicht [g/dm³] | **200** | **150** | **150** | **170** | **170** | **200** | **170** | **170** | **170** | **200** | **200** |
| Rohgewicht [g/dm³] | 1.100 | 1.100 | 1.100 | 1.100 | 1.100 | 1.100 | 1.000 | 1.00 0 | 1.000 | 1.000 | 1.000 |
| Materialdicke [mm] | **0,6** | **0,6** | **0,6** | **0,6** | **0,6** | **0,6** | **0,6** | **0,6** | **0,6** (0,62-0,65) | **0,6** (0,62-0.65) | **0,6** (0,62-0,65) |
| Materialgewicht [g/m²] | 331-335 | 331-335 | 331-335 | 331-335 | 331-335 | 331-336 | 307-315 | 307-315 | 480 | 480 | 480 |
| Spaltmaß am Rakel [mm] | 1,5 | 1,5 | 2 | 1,5 | 1,5 | 1,7 | 1,7 | 1,7 | 1,7 | 1,5 | 1,5 |
| Rakelmesser L-Form | ./. | ./. | ./. | ./*.* | ./. | ./. | ./. | ./. | ./. | ./. | ./. |
| Rakelmesser KeilForm | ja | ja | ja | ja | ja | ja | ja | ja | ja | ja | ja |
| | | | | | | | | | | | |
| Maschinengeschwindi gkeit [m/min] | 3,0 | 4,0 | 4,0 | 4,0 | 4,0 | 4,0 | 4,0 | 4,0 | 4,0 | 2,5 | 2,5 |
| Temperatur IR-Feld [°C] | 700/700 | 700/700 | 700/700 | 700/700 | 700/700 | 700/700 | 0/0 | 700/700 | 700/700 | 560/560 | 560/560 |
| Abstand IR-Feld zur Ware [mm] | 90 | 90 | 90 | 90 | 90 | 90 | ./. | 90 | 90 | 250 | 250 |
| | | | | | | | | | | | |
| Ofentemperatur 1tes Feld [°C] | 140 | 140 | 140 | 140 | 140 | 140 | 140 | 140 | 140 | 140 | 140 |
| Ofentemperatur 2tes Feld [°C] | 140 | 140 | 140 | 140 | 140 | 140 | 140 | 160 | 160 | 160 | 160 |
| | | | | | | | | | | | |
| Abwicklung von oben | ja | ja | ja | ja | ja | ja | ja | ja | ja | ja | ja |
| Abwicklung von unten | ./. | ./. | | ./. | ./. | ./. | | ./. | ./. | ./. | ./. |
| | | | | | | | | | | | |
| Aufwicklung von oben | ./. | ./. | ./. | ./. | ./. | ./. | ./. | | ./. | ./. | ./. |
| Aufwicklung von unten | ja | ja | ja | ja | ja | ja | ja | ja | ja | ja | ja |
| | | | | | | | | | | | |
| | | | | | | | | | | | |
| | | | | | | | | | | | |
| Ergebnis | | | | | | | | | | | |
| Materialdicke nach Trocknung [mm] | 1,6 | 1,35 | 1,45 | 1,6 | 1,5 | 1,6 | 1,65 | 1,68 | 1,6 | 1.7 | 1,7 |
| Gesamtgewicht nach Trocknung [g/m²] | 621 | 516 | 570 | 547 | 535 | 555 | 533 | 536 | 698 | 700 | 721 |
| Schaumgewicht nach Trocknung [g/dm³] | 290 | 246 | 281 | 216 | 226 | 224 | 212 | 209 | 218 | 200 | 219 |
| Ergebnis: | | bei 150g/lt Schaumgewicht ist die Oberfläche relativ offenporig. Schlechte rer Rückstell fähigkeit. Schaumfällt relativ leicht wieder in sich zusammen, dadurch teilweise Verhärtungen an der Rückseite | | | | | Oberflächerissig | bis dahin bestes Ergebnis | IR-Feld verursacht Blasen beim trocknen. | IR Feld - 500°C/ 500°C 2,0m auch OK | |

Die Muster 5, 8, 9 und 11 wurden getestet und allesamt als gut befunden.

Die Maschinengeschwindigkeit ist die Bahngeschwindigkeit mit der das Produkt beschichtet wird. Abwicklung von oben/unten bedeutet, dass die zu beschichtende Rolle so eingehängt werden kann, dass sie im oder gegen den Uhrzeiger Sinn dreht. Je nachdem ob die Unter- oder Oberseite beschichtet werde soll.

### Beispiel 4: Rollbarkeit von verschiedenen Tapeten und Trägermaterialien

Im Folgenden sind die Ergebnisse der wie in Beispiel 1 beschrieben durchgeführten Bestimmung der Rollbarkeit für die angegebenen Probestücke dargestellt.

Bei der entsprechenden ersten Begutachtung wurde festgestellt, dass
bei Trägermaterial 1 keine Risse, Brüche, oder sonstige Beschädigungen oder Beeinträchtigungen;
bei Trägermaterial 2 keine Risse, Brüche, oder sonstige Beschädigungen oder Beeinträchtigungen;
bei Trägermaterial 3 keine Risse, Brüche, oder sonstige Beschädigungen oder Beeinträchtigungen; und
bei Abdecktapete Trägermaterial 4 keine Risse, Brüche, oder sonstige Beschädigungen oder Beeinträchtigungen;
bei "Muster 1" bis "Muster 11" keine Risse, Brüche, oder sonstige Beschädigungen oder Beeinträchtigungen;
   auftraten.

Bei der entsprechenden zweiten Begutachtung wurde festgestellt, dass
bei Trägermaterial 1 keine Risse, Brüche, oder sonstige Beschädigungen oder Beeinträchtigungen;
bei Trägermaterial 2 keine Risse, Brüche, oder sonstige Beschädigungen oder Beeinträchtigungen;
bei Trägermaterial 3 keine Risse, Brüche, oder sonstige Beschädigungen oder Beeinträchtigungen; und
bei Abdecktapete Trägermaterial 4 keine Risse, Brüche, oder sonstige Beschädigungen oder Beeinträchtigungen; und
bei "Muster 1" bis "Muster 11" keine Risse, Brüche, oder sonstige Beschädigungen oder Beeinträchtigungen;

### Beispiel 5: Zug- und Druck-Eigenschaften von verschiedenen Tapeten und Trägermaterialien

Die Tapeten in Besipiel 5 entsprechen dem Muster mit der jeweils gleichen Nummerierung in Beispiel 3. Tapete Nr.1 entspricht bspw. Muster 1, Tapete Nr.8 entspricht bspw. Muster 8, und Tapete Nr.9 entspricht bspw. Muster 9.

Die Auswahl des Musters 1 erfolgte aufgrund des hohen Schaumgewichts (200g/lt). Ziel war ein möglichst geringes Gesamtgewicht zu erreichen, weshalb Muster 8 getestet wurde. Muster 9 weist ein geringes Gewicht und glatte Oberfläche auf.

Im Folgenden sind die Ergebnisse der wie in Beispiel 1 beschrieben durchgeführten Zugtests und Drucktests für die angegebenen Probestücke dargestellt.

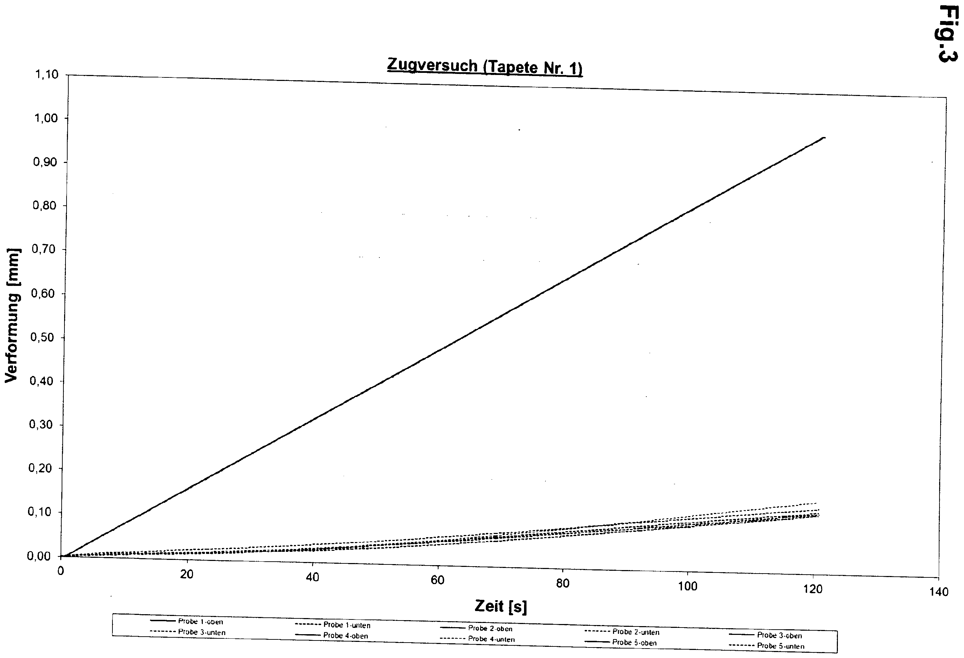

Die Ergebnisse sind in Tabelle 4 und Figuren 3 bis 12 dargestellt.

**Tabelle 3: Ergebnisse des Zug- und Drucktestes**

| **Zugversuch** | | | | | | |
|---|---|---|---|---|---|---|
| **Tapete Nr. 1 (mit Schaum)** | | | | | | |
| Weg oben (Schaumseite): Bewegung der beiden Auflager (Prüfmaschinenweg) | | | | | | |
| Weg unten (Glastapetenseite): Bewegung des einzelnen Auflagers (Wegaufnehmer) | | | | | | |

| **Probe** | **Verformung unten zu oben** | | | **[mm]** | | |
|---|---|---|---|---|---|---|
| **Nr.** | **0,3** | **0,5** | **0,7** | **1,0** | | oben Schaumseite |
| 1 | 0,0288 | 0,0550 | 0,0850 | 0,1363 | | unten Sichtseite |
| 2 | 0,0300 | 0,0575 | 0,0975 | 0,1638 | | unten Sichtseite |
| 3 | 0,0250 | 0,0488 | 0,0800 | 0,1325 | | unten Sichtseite |
| 4 | 0,0375 | 0,0650 | 0,0975 | 0,1488 | | unten Sichtseite |
| 5 | 0,0263 | 0,0563 | 0,0900 | 0,1388 | | unten Sichtseite |
| **Mittelwert** | **0,0295** | **0,0565** | **0,0900** | **0,1440** | | |
| **Verhältnis Verformung unten zu oben** | **0,10** | **0,11** | **0,13** | **0,14** | nahezu linear | |

| **Druckversuch** | | | | | | |
|---|---|---|---|---|---|---|
| **Tapete Nr. 1 (mit Schaum)** | | | | | | |
| Weg oben: Bewegung der beiden Auflager (Prüfmaschinenweg) | | | | | | |
| Weg unten: Bewegung des einzelnen Auflagers (Wegaufnehmer) | | | | | | |
| | | | | | | |
| **Probe** | **Verformung unten zu oben [mm]** | | | | | |
| **Nr.** | **0,3** | **0,5** | **0,7** | **1,0** | | oben Schaumseite |
| 1 | 0,0375 | 0,0738 | 0,1263 | 0,2488 | | unten Sichtseite |
| 2 | 0,0313 | 0,0675 | 0,1238 | 0,2575 | | unten Sichtseite |
| 3 | 0,0513 | 0,0850 | 0,1363 | 0,2600 | | unten Sichtseite |
| 4 | 0,0388 | 0,0763 | 0,1338 | 0,2663 | | unten Sichtseite |
| 5 | 0,0425 | 0,0838 | 0,1488 | 0,2975 | | unten Sichtseite |
| **Mittelwert** | **0,0403** | **0,0773** | **0,1338** | **0,2660** | | |
| | **0,13** | **0,15** | **0,19** | **0,27** | | |
| | | | | | | |

| **Zugversuch** | | | | | | |
|---|---|---|---|---|---|---|
| **Tapete Nr. 9 (mit Schaum)** | | | | | | |
| Weg oben (Schaumseite): Bewegung der beiden Auflager (Prüfmaschinenweg) | | | | | | |
| Weg unten (Glastapetenseite): Bewegung des einzelnen Auflagers (Wegaufnehmer) | | | | | | |
| **Probe** | **Verformung unten zu oben [mm]** | | | | | |
| **Nr.** | **0,3** | **0,5** | **0,7** | **1,0** | | oben Schaumseite |
| 1 | 0,0188 | 0,0325 | 0,0525 | 0,0900 | | unten Sichtseite |
| 2 | 0,0175 | 0,0300 | 0,0500 | 0,0850 | | unten Sichtseite |
| 3 | 0,0138 | 0,0275 | 0,0463 | 0,0750 | | unten Sichtseite |
| 4 | 0,0163 | 0,0300 | 0,0463 | 0,0713 | | unten Sichtseite |
| 5 | 0,0163 | 0,0313 | 0,0500 | 0,0775 | | unten Sichtseite |
| **Mittelwert** | **0,0165** | **0,0303** | **0,0490** | **0,0798** | | |
| **Verhältnis Verformung unten zu oben** | **0,06** | **0,06** | **0,07** | **0,08** | nahezu linear | |
| | | | | | | |

| **Druckversuch** | | | | | | |
|---|---|---|---|---|---|---|
| **Tapete Nr. 9 (mit Schaum)** | | | | | | |
| Weg oben (Schaumseite): Bewegung der beiden Auflager (Prüfmaschinenweg) | | | | | | |
| Weg unten (Glastapetenseite): Bewegung des einzelnen Auflagers (Wegaufnehmer) | | | | | | |
| **Probe** | **Verformung unten zuoben [mm]** | | | | | |
| **Nr.** | **0,3** | **0,5** | **0,7** | **1,0** | | oben Schaumseite |
| 1 | 0,0200 | 0,0313 | 0,0550 | 0,1300 | | unten Sichtseite |
| 2 | 0,0388 | 0,0750 | 0,1338 | 0,2725 | | unten Sichtseite |
| 3 | 0,0450 | 0,0738 | 0,1050 | 0,1725 | | unten Sichtseite |
| 4 | 0,0300 | 0,0500 | 0,0850 | 0,1875 | | unten Sichtseite |
| 5 | 0,0338 | 0,0663 | 0,1150 | 0,2313 | | unten Sichtseite |
| **Mittelwert** | **0,0335** | **0,0593** | **0,0988** | **0,1988** | | |
| **Verhältnis Verformung unten zu oben** | **0,11** | **0,12** | **0,14** | **0**,**20** | | |
| | | | | | | |

| **Druckversuch** | | | | | | |
|---|---|---|---|---|---|---|
| **Tapete Nr. 8 (mit Schaum)** | | | | | | |
| Weg oben: Bewegung der | beiden Auflager | (Prüfmaschinenweg) | | | | |
| Weg unten: Bewegung | des einzelnen Auflagers | (Wegaufnehmer) | | | | |
| **Probe** | **Verformung unten zu oben [mm]** | | | | | |
| **Nr.** | **0,3** | **0,5** | **0,7** | **1,0** | | oben Schaumseite |
| 1 | 0,0350 | 0,0725 | 0,1250 | 0,2600 | | unten Sichtseite |
| 2 | 0,0425 | 0,0850 | 0,1500 | 0,3075 | | unten Sichtseite |
| 3 | 0,0800 | 0,1288 | 0,1975 | 0,3525 | | unten Sichtseite |
| 4 | 0,0838 | 0,1250 | 0,1863 | 0,3300 | | unten Sichtseite |
| 5 | 0,0713 | 0,1200 | 0,1863 | 0,3325 | | unten Sichtseite |
| **Mittelwert** | **0,0625** | **0,1063** | **0,1690** | **0,3165** | | |
| **Verhältnis Verformung unten zu oben** | **0,21** | **0,21** | **0,24** | **0,32** | | |
| | | | | | | |

| **Druckversuch** | | | | | | |
|---|---|---|---|---|---|---|
| **Tapete Trägermaterial** 1 **(Nr. 66000) (ohne Schaum)** | | | | | | |
| Weg oben (Schaumseite): Bewegung der beiden Auflager (Prüfmaschinenweg) | | | | | | |
| Weg unten (Glastapetenseite): Bewegung des einzelnen Auflagers (Wegaufnehmer) | | | | | | |
| **Probe** | **Verformung unten zu oben [mm]** | | | | | |
| **Nr.** | **0,3** | **0,5** | **0,7** | **1,0** | | oben Rückseite |
| 1 | 0,2488 | 0,4075 | 0,5650 | 0,8025 | | unten Sichtseite |
| 2 | 0,2050 | 0,3600 | 0,5138 | 0,7463 | | unten Sichtseite |
| 3 | 0,2375 | 0,3938 | 0,5488 | 0,7813 | | unten Sichtseite |
| 4 | 0,2363 | 0,3925 | 0,5488 | 0,7838 | | unten Sichtseite |
| 5 | 0,2350 | 0,3913 | 0,5463 | 0,7788 | | unten Sichtseite |
| **Mittelwert** | **0,2325** | **0,3890** | **0,5445** | **0,7785** | | |
| **Verhältnis Verformung unten zu oben** | **0,78** | **0,78** | **0,78** | **0,78** | lineares Verhältnis | |

Die Verklebetests haben gezeigt, dass die bei uns verklebten Muster 5, 8, 9, 11 allesamt geeignet sind. Sich die Struktur einer abzudeckenden Untertapete bei Verwendung des Trägermaterials 1 ohen Schaumschicht jedoch durchzeichnet.

Die vorliegenden Erfinder nehmen an ohne jedoch im Folgenden daran gebunden zu sein, dass es wichtig ist, dass die Tapete bei Zug die Oberfläche nicht mehr als 0,14 mm bei 1 mm Zug mitzieht. Es wird weiter angenommen, dass eine Tapete bei einem Wert von 0,25 mm noch die erfindungsgemäßen Abdeckeigenschaften zeigt. Bei diesem Test ist keine der getesteten Tapeten "Muster 1" bis "Muster 11" als für die erfindungsgemäße Verwendung unzureichend charakterisiert worden. Vielmehr kann aus den obigen Ergebnissen entnommen werden, dass eine gewisse Bandbreite an Zug- und Druckwerten besteht bei der eine erfindungsgemäße Tapete noch die gewünschten Abdeckeigenschaften bzw. Glätteigenschaften zeigt. Bei der Tapete Nr. 66000, d.h. Trägermaterial 1, ohne Schaum war dagegen der Druckprüfung das Verhältnis Verformung von unten zu oben bei 0,78. Eine einer Druckprüfung des Trägermaterials zeigt das gleiche Verhältnis.

Bei den Versuchen hat sich gezeigt dass sich die Tapetensichtseite bei einer Eindrückung von 1mm auf dem Schaum (Tapetenunterseite) um max. 0,32mm und min. 0,20mm auf der Tapetensichtseite durchdrückt.

Bei 0,5mm Eindrückung drückt sich die Tapetensichtseite max. 0,106mm und min. 0,059mm durch.

Noch extremer verhält es sich wenn an dem Schaum gezogen wird, wie bei dem hierin beschriebenen Zugtest.

Bei 1 mm Zug am Schaum verformt sich die Tapetensichtseite max. 0,144 und min. 0,080 mm. Es kommen also nur 14 bzw. 8% der rückseitigen Verformung messbar an der Oberfläche an.

Hier ist das Verhältnis bei 0,3 - 1,0 mm Eindrückung relativ linear.

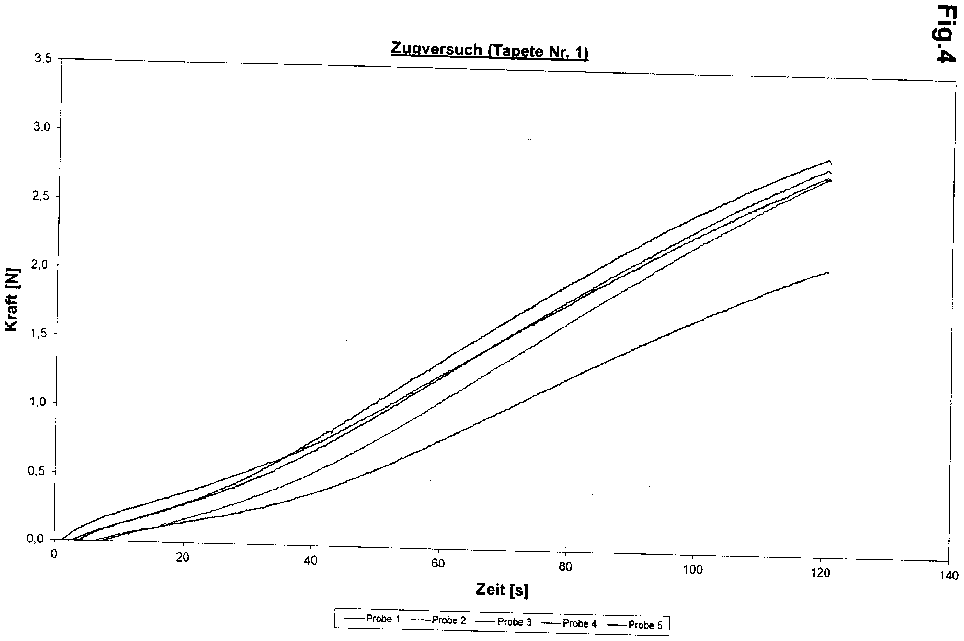

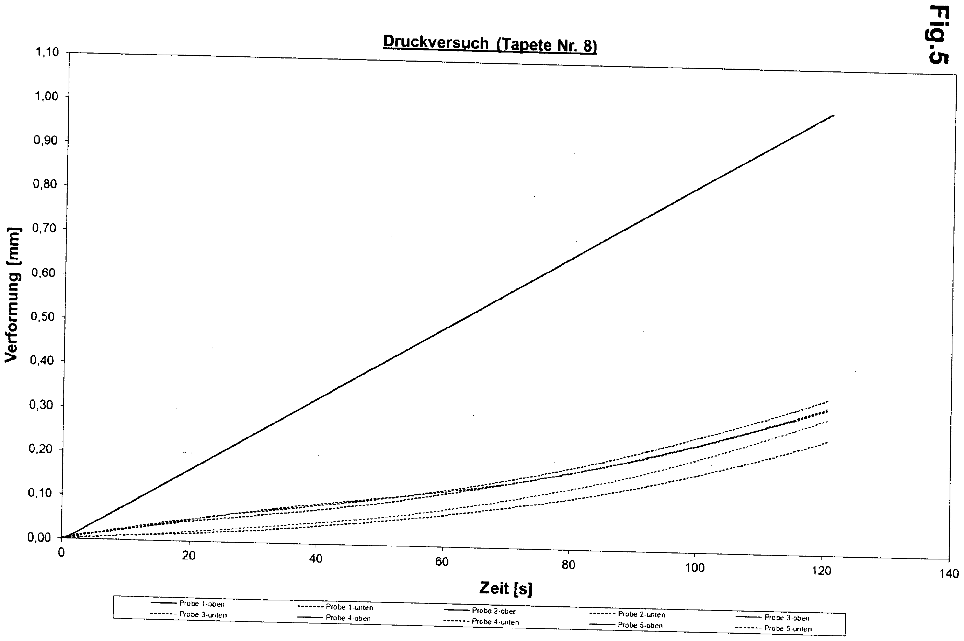

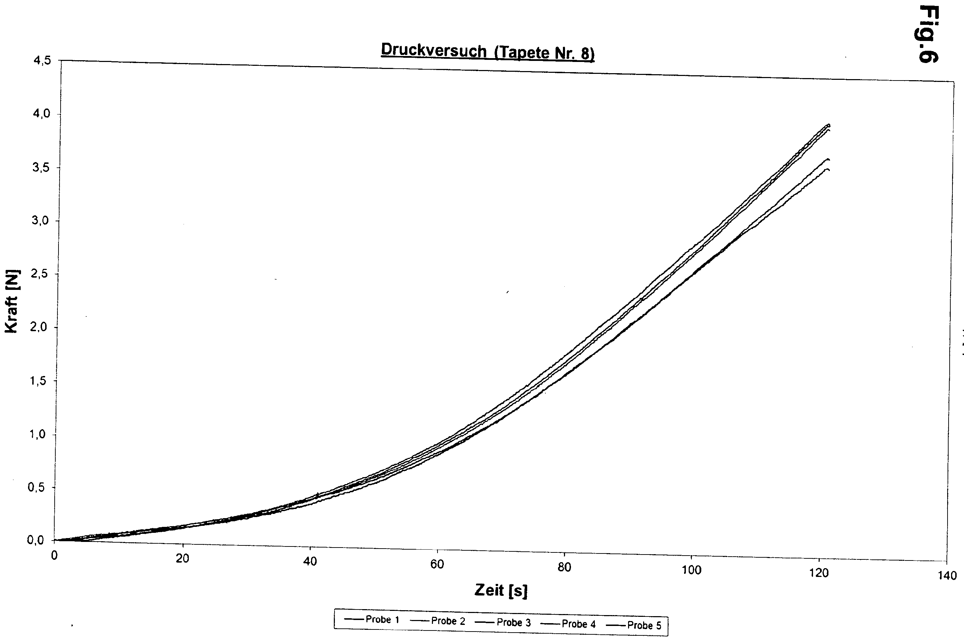

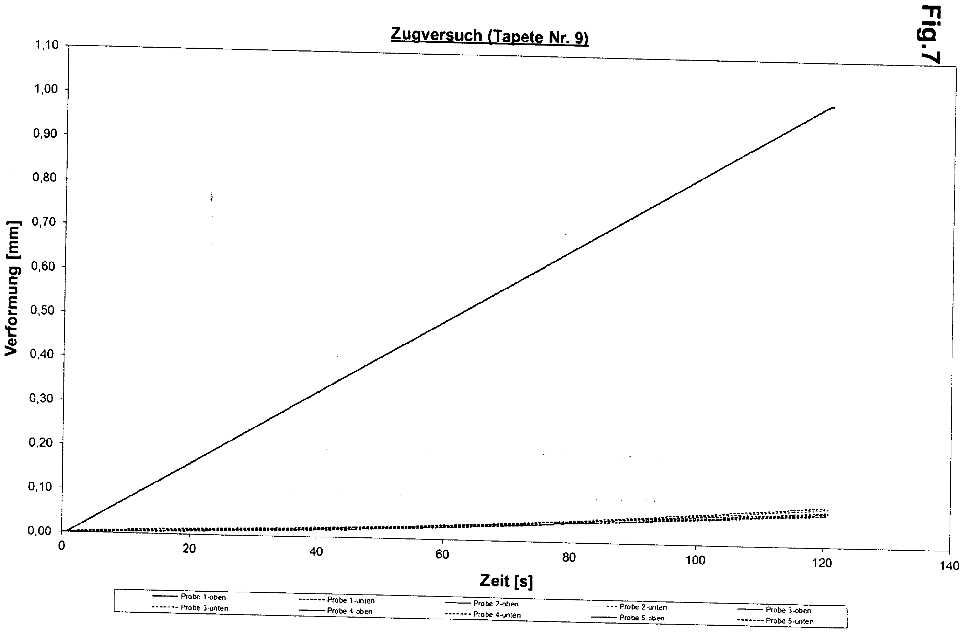

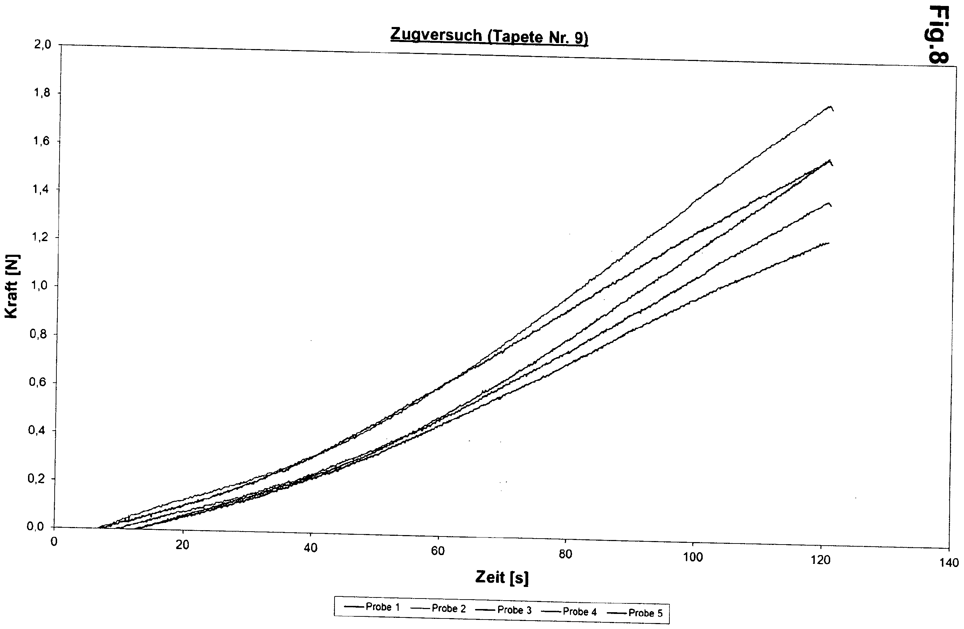

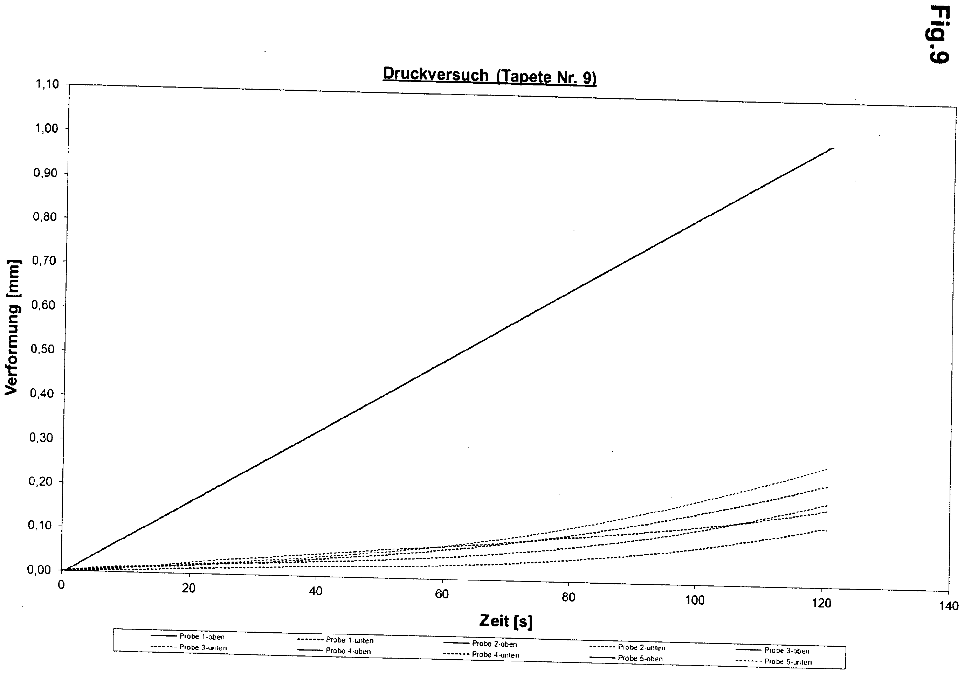

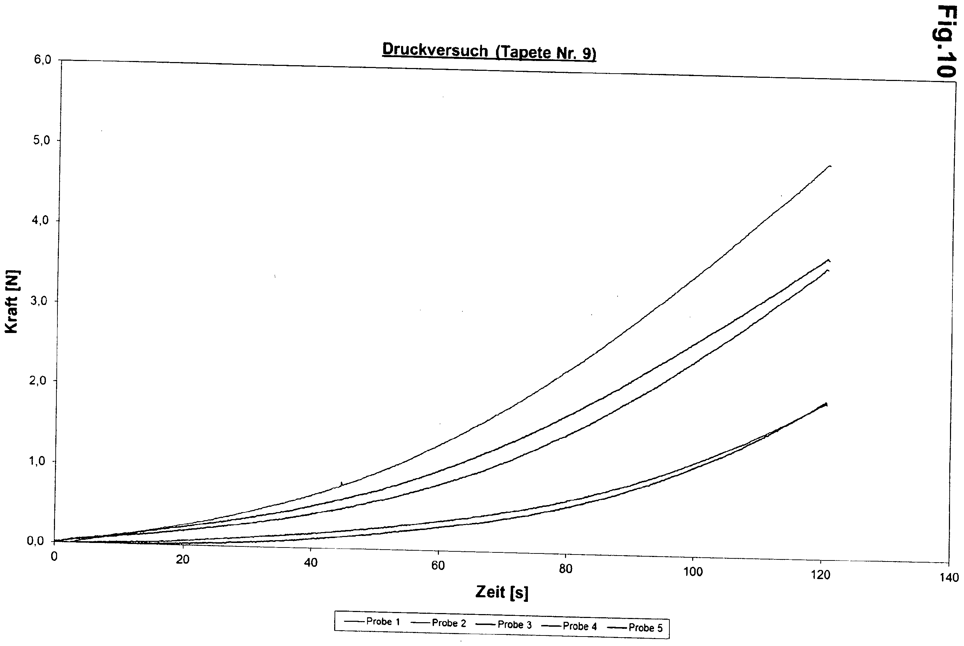

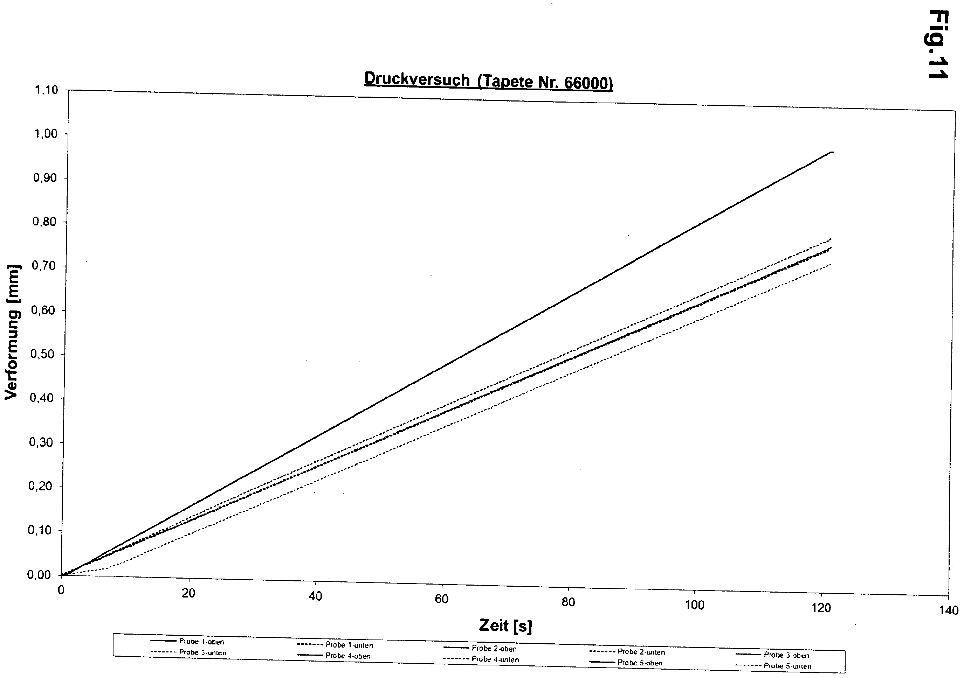

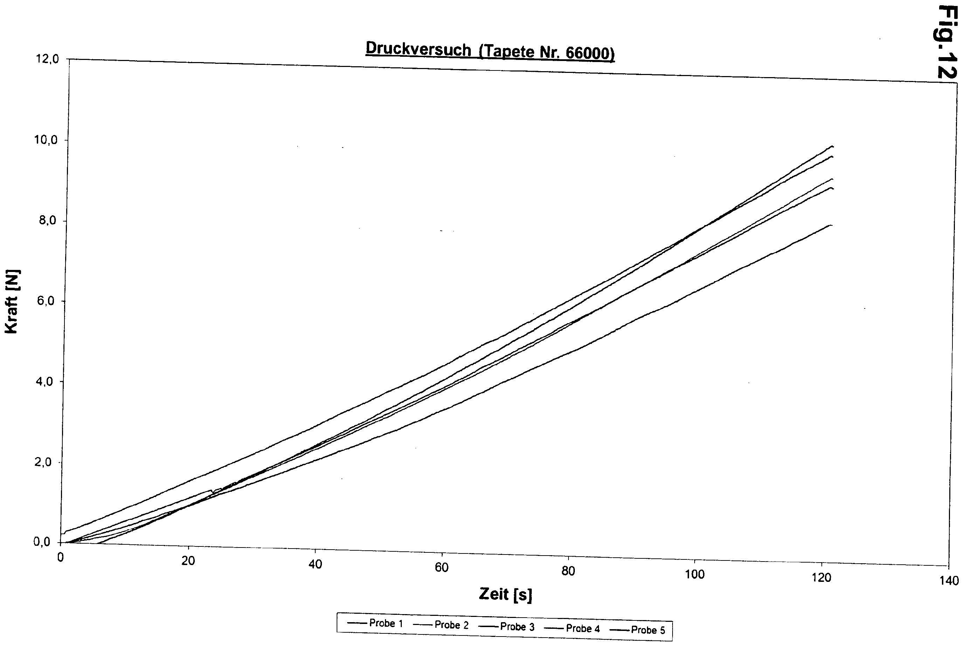

Figur 3 ist ein Diagramm, das die Verformung über die Zeit von Tapete 1 im Rahmen des gemäß Beispiel 1 durchgeführten Zugtests zeigt; Figur 4 ist ein Diagramm, das die Kraft über die Zeit von Tapete 1 im Rahmen des gemäß Beispiel 1 durchgeführten Zugtests zeigt; Figur 5 ist ein Diagramm, das die Verformung über die Zeit von Tapete 8 Rahmen des gemäß Beispiel 1 durchgeführten Drucktests zeigt; Figur 6 ist ein Diagramm, das die Kraft über die Zeit von Tapete 8 im Rahmen des gemäß Beispiel 1 durchgeführten Drucktests zeigt; Figur 7 ist ein Diagramm, das die Verformung über die Zeit von Tapete 9 im Rahmen des gemäß Beispiel 1 durchgeführten Zugtests zeigt; Figur 8 ist ein Diagramm, das die Kraft über die Zeit von Tapete 9 im Rahmen des gemäß Beispiel 1 durchgeführten Zugtests zeigt; Figur 9 ist ein Diagramm, das die Verformung über die Zeit von Tapete 9 im Rahmen des gemäß Beispiel 1 durchgeführten Drucktests zeigt; Figur 10 ist ein Diagramm, das die Kraft über die Zeit von Tapete 9 im Rahmen des gemäß Beispiel 1 durchgeführten Drucktests zeigt; Figur 11 ist ein Diagramm, das die Verformung über die Zeit von Trägermaterial 1 (Tapete Nr. 66000) Im Rahmen des gemäß Beispiel 1 durchgeführten Drucktests zeigt; Figur 12 ist ein Diagramm, das die Kraft über die Zeit von Trägermaterial 1 (Tapete Nr. 66000) im Rahmen des gemäß Beispiel 1 durchgeführten Drucktests zeigt.

## Patentansprüche

1. Rollbares Mittel zum Glätten einer Oberfläche, wobei die Oberfläche wenigstens eine Unebenheit aufweist, wobei das Mittel bevorzugterweise eine Tapete ist, wobei das Mittel eine Trägerschicht und eine Schaumschicht umfassend einen Schaum umfasst, wobei auf einer ersten Seite der Trägerschicht die Schaumschicht angeordnet ist und wobei eine zweite Seite der Trägerschicht der wenigstens eine Unebenheit aufweisenden Oberfläche abgewandt ist, wobei die Trägerschicht und die Schaumschicht optional lösbar miteinander verbunden sind, wobei die Schaumschicht bei einer Kompression auf 50% nach 24 h einen Druckverformungsrest von 0% bis 50%, aufweist und wobei die Trägerschicht eine maximale Kraft von mehr als 2,0 N aufnimmt, wie gemessen in einem Biegetest gemäß DIN ISO 178.

2. Mittel nach Anspruch 1, wobei das Mittel eine Stärke von 1,0 mm bis 3,0 mm, bevorzugterweise von 1,0 mm bis 2,5 mm, bevorzugtererweise von 1,0 mm bis 2,0 mm und bevorzugtesterweise von 1,1 mm bis 1,8 mm aufweist.

3. Mittel nach einem der Ansprüche 1 bis 2, wobei das Mittel ein Gewicht von 300 g/m² bis 1.000 g/m², bevorzugterweise von 500 g/m² bis 800g/m² oder bevorzugterweise von 300 bis 350 g/m² aufweist.

4. Mittel nach einem der Ansprüche 1 bis 3, wobei die Schaumschicht eine Stärke von 0,5 mm bis 2,8 mm, bevorzugterweise von 0,8 mm bis 2,7 mm, bevorzugtererweise von 0,75 mm bis 2,4 mm und bevorzugtesterweise von 0,8 mm bis 1,1 mm aufweist.

5. Mittel nach einem der Ansprüche 1 bis 4, wobei die Schaumschicht eine Dichte von 150 g/dm³ bis 500 g/dm³, bevorzugterweise 200 g/dm³ bis 340 g/dm³ und bevorzugtererweise 270 g/dm³ aufweist.

6. Mittel nach einem der Ansprüche 1 bis 5, wobei die Schaumschicht bei einer Kompression auf 50% nach 24 h einen Druckverformungsrest von 15% bis 25% aufweist.

7. Mittel nach einem der Ansprüche 1 bis 6, wobei eine zweite Seite der Trägerschicht zur Aufnahme einer weiteren Tapete, eines Anstriches, eines Dispersionsputzes und/oder anderem Wandbelag geeignet ist, wobei wenn das Mittel auf der Oberfläche angebracht ist, die zweite Seite der Trägerschicht der Oberfläche, die wenigstens eine Unebenheit aufweist, abgewandt ist.

8. Mittel nach einem der Ansprüche 1 bis 7, wobei die Trägerschicht eine Stärke von 0,3 mm bis 1,0 mm, bevorzugterweise 0,5 mm bis 0,75 mm, bevorzugtererweise 0,55 mm bis 0,65 mm, bevorzugtesterweise 0,6 mm aufweist oder wobei die Trägerschicht eine Stärke von 0,3 mm bis 0,4 mm, bevorzugterweise von 0,35 mm aufweist.

9. Mittel nach einem der Ansprüche 1 bis 8, wobei die Trägerschicht eine maximale Kraft von mehr als 2,5 N, von mehr als 5 N, bevorzugterweise von mehr als 7,5 N, bevorzugtererweise von mehr als 9 N, bevorzugtesterweise mehr als 10 N aufnimmt.

10. Mittel nach einem der Ansprüche 1 bis 9, wobei die Trägerschicht ein Gewicht von 120 g/m² bis 550 g/m², bevorzugterweise 220 g/m² bis 475 g/m², bevorzugtererweise 260 g/m² bis 400 g/m², bevorzugtesterweise 320 g/m² bis 355 g/m² aufweist oder wobei die Trägerschicht bevorzugterweise ein Gewicht von 130 bis 170 g/m² aufweist.

11. Mittel nach einem der Ansprüche 1 bis 10, wobei die Trägerschicht eine Trägerschicht ist, die eine erste Papierschicht, eine erste Gewebeschicht, eine erste Vliesschicht, und/oder eine erste Kunststoffschicht umfasst.

12. Mittel nach einem der Ansprüche 1 bis 11, wobei die Trägerschicht eine erste Vliesschicht und eine zweite Vliesschicht umfasst, wobei die erste Vliesschicht mit der zweiten Vliesschicht verbunden ist und wobei die erste und die zweite Vliesschicht Fasern umfasst, wobei die Fasern für die erste und die zweite Vliesschicht unabhängig voneinander ausgewählt sind aus der Gruppe umfassend Glasfasern, Zellstofffasern, Polyesterfasern, Naturfasern, Zellulosefasern und Mischungen davon.

13. Mittel nach einem der Ansprüche 1 bis 12, wobei die erste Seite und/oder die zweite Seite der Trägerschicht eine Beschichtung aufweist.

14. Verfahren zum Glätten einer Oberfläche, wobei die Oberfläche wenigstens eine Unebenheit aufweist, umfassend die folgenden Schritte:
Schritt a) Auftragen von Kleber, bevorzugterweise Tapetenkleber, bevorzugtererweise Tapeten-Dispersionskleber auf wässriger Basis auf die Oberfläche, wobei die Oberfläche wenigstens eine Unebenheit aufweist; und/oder Auftragen des Klebers auf die Seite des Mittels, die der wenigstens einen Unebenheit der Oberfläche zugewandt ist wenn das Mittel auf der Oberfläche angebracht ist;
Schritt b) Aufbringen eines Mittels nach einem der vorhergehenden Ansprüche auf die aus Schritt a) erhaltene Oberfläche; und
Schritt c) wahlweise Streichen des Mittels.

15. Verfahren zur Herstellung eines Mittels zum Glätten einer Oberfläche, wobei die Oberfläche wenigstens eine Unebenheit aufweist, wobei das Mittel ein Mittel nach einem der vorhergehenden Ansprüche ist und wobei das Verfahren die folgenden Schritte umfasst:
Schritt a): Bereitstellen einer Trägerschicht;
Schritt b): Aufschäumen eines Schaumes, bevorzugterweise eines Schaumes wie er in einem der vorangehenden Ansprüche definiert ist;
Schritt c): Auftragen des Schaumes auf die Trägerschicht; und
Schritt d): Trocknen des Schaumes.

## Claims

1. A means which can be rolled up, for smoothening a surface, wherein the surface comprises at least one unevenness, wherein the means is preferably a wallpaper, wherein the means comprises a support layer and a foam layer comprising a foam, wherein the foam layer is arranged on a first side of the support layer and wherein a second side of the support layer is facing away from the surface comprising at least one unevenness, wherein the support layer and the foam layer are connected to each other in an optionally detachable manner, wherein the foam layer upon compression to 50 % shows a remaining compression deformation of 0 % to 50 % after 24 h and wherein the support layer absorbs a maximum force of more than 2.0 N, as determined in a bending test in accordance with DIN ISO 178.

2. Means according to claim 1, wherein the means has a size of 1.0 mm to 3.0 mm, preferably of 1.0 mm to 2.5 mm, more preferably of 1.0 mm to 2.0 mm and most preferably of 1.1 to 1.8 mm.

3. Means according to any one of claims 1 to 2, wherein the means has a weight of 300 g/m² to 1,000 g/m², preferably of 500 g/m² to 800 g/m² or more preferably of 300 to 350 g/m².

4. Means according to any one of claims 1 to 3, wherein the foam layer has a size of 0.5 mm to 2.8 mm, preferably of 0.8 mm to 2.7 mm, more preferably of 0.75 mm to 2.4 mm and most preferably of 0.8 mm to 1.1 mm.

5. Means according to any one of claims 1 to 4, wherein the foam layer has a density of 150 g/dm³ to 500 g/dm³, preferably of 200 g/dm³ to 340 g/dm³ and more preferably of 270 g/dm³.

6. Means according to any one of claims 1 to 5, wherein the foam layer upon compression to 50 % shows a remaining compression deformation of 15% to 25 % after 24 h.

7. Means according to any one of claims 1 to 6, wherein a second side of the support layer is suitable for receiving another wallpaper, a paint, a dispersion based scrub plaster and/or any different wall covering, wherein when the means is attached to the surface, the second side of the support layer is facing away from the surface comprising at least one unevenness.

8. Means according to any one of claims 1 to 7, wherein the support layer has a size of 0.3 mm to 1.0 mm, preferably of 0.5 mm to 0.75 mm, more preferably of 0.55 mm to 0.65 mm, most preferably 0.6 mm or wherein the support layer has a size of 0.3 mm to 0.4 mm, preferably of 0.35 mm.

9. Means according to any one of claims 1 to 8, wherein the support layer absorbs a maximum force of more than 2.5 N, of more than 5 N, preferably of more than 7.5 N, more preferably of more than 9 N, most preferably of more than 10 N.

10. Means according to any one of claims 1 to 9, wherein the support layer has a weight of 120 g/m² to 550 g/m², preferably of 220 g/m² to 475 g/m², more preferably of 260 g/m² to 400 g/m², most preferably of 320 g/m² to 355 g/m², or wherein the support layer preferably has a weight of 130 to 170 g/m².

11. Means according to any one of claims 1 to 10, wherein the support layer is a support layer which comprises a first paper layer, a first fabric layer, a first fleece layer and/or a first plastic layer.

12. Means according to any one of claims 1 to 11, wherein the support layer comprises a first fleece layer and a second fleece layer, wherein the first fleece layer is attached to the second fleece layer and wherein the first and the second fleece layer comprise fibres, wherein the fibres for the first fleece layer and for the second fleece layer are independently selected from the group comprising glass fibres, pulp fibres, polyester fibres, natural fibres, cellulose fibres and mixtures thereof.

13. Means according to any one of claims 1 to 12, wherein the first side and/or the second side of the support layer comprise a coating.

14. Method for smoothening a surface, wherein the surface comprises at least one unevenness, comprising the following steps:
step a) applying adhesive, preferably wallpaper glue, more preferably water-based wallpaper dispersion adhesive onto the surface, wherein the surface comprises at least one unevenness; and/or applying the adhesive on the side of the means which is facing the at least one unevenness of the surface when the means is attached to the surface;
step b): applying a means according to any one of the preceding claims onto the surface obtained in step a); and
step c) optionally painting the means.

15. Method for the preparation of a means for smoothening a surface, wherein the surface comprises at least one unevenness, wherein the means is a means according to any one of the preceding claims and wherein the method comprises the following steps:
step a): providing a support layer;
step b): foaming a foam, preferably a foam as defined in any one of the preceding claims;
step c): applying the foam onto the support layer; and
step d): drying the foam.

## Revendications

1. Moyen à rouler pour lisser une surface, dans lequel la surface comprend au moins une inégalité, dans lequel le moyen est de préférence un tapis, dans lequel le moyen comprend une couche de support et une couche de mousse comprenant une mousse, dans lequel la couche de mousse est agencée sur une première face de la couche de support et dans lequel une seconde face de la couche de support est opposée à la surface présentant au moins une inégalité, la couche de support et la couche de mousse étant facultativement reliées l'une à l'autre de manière amovible, dans lequel la couche de mousse, à une compression jusqu'à 50 % après une durée de 24 h, présente une déformation de pression de 0 % à 50 % et dans lequel la couche de support supporte une force maximale de plus de 2,0 N, comme cela a été mesuré lors d'un essai de flexion selon la norme DIN ISO 178.

2. Moyen selon la revendication 1, dans lequel le moyen présente une épaisseur de 1,0 mm à 3,0 mm, de préférence de 1,0 mm à 2,5 mm, plus préférentiellement de 1,0 mm à 2,0 mm et de préférence maximale de 1,1 mm à 1,8 mm.

3. Moyen selon l'une quelconque des revendications 1 à 2, dans lequel le moyen présente un poids de 300 g/m² à 1 000 g/m², de préférence de 500 g/m² à 800 g/m² ou de préférence de 300 à 350 g/m².

4. Moyen selon l'une quelconque des revendications 1 à 3, dans lequel la couche de mousse présente une épaisseur de 0,5 mm à 2,8 mm, de préférence de 0,8 mm à 2,7 mm, plus préférentiellement de 0,75 mm à 2,4 mm et de préférence maximale de 0,8 mm à 1,1 mm.

5. Moyen selon l'une quelconque des revendications 1 à 4, dans lequel la couche de mousse présente une densité de 150 g/dm³ à 500 g/dm³, de préférence de 200 g/dm³ à 340 g/dm³ et plus préférentiellement de 270 g/dm³.

6. Moyen selon l'une quelconque des revendications 1 à 5, dans lequel la couche de mousse, à une compression jusqu'à 50 % après une durée de 24 h, présente une déformation de pression de 15 % à 25 %.

7. Moyen selon l'une quelconque des revendications 1 à 6, dans lequel une seconde face de la couche de support est apte à recevoir un autre tapis, une peinture, un enduit à dispersion et/ou un autre revêtement, dans lequel la seconde face de la couche de support est opposée à la surface présentant au moins une inégalité une fois le moyen étant appliqué sur la surface.

8. Moyen selon l'une quelconque des revendications 1 à 7, dans lequel la couche de support présente une épaisseur de 0,3 mm à 1,0 mm, de préférence de 0,5 mm à 0,75 mm, plus préférentiellement de 0,55 mm à 0,65 mm, de préférence maximale de 0,6 mm ou dans lequel la couche de support présente une épaisseur de 0,3 mm à 0,4 mm, de préférence de 0,35 mm.

9. Moyen selon l'une quelconque des revendications 1 à 8, dans lequel la couche de support supporte une force maximale de plus de 2,5 N, de plus de 5 N, de préférence de plus de 7,5 N, plus préférentiellement de plus de 9 N, de préférence maximale de plus de 10 N.

10. Moyen selon l'une quelconque des revendications 1 à 9, dans lequel la couche de support présente un poids de 120 g/m² à 550 g/m², de préférence de 220 g/m² à 475 g/m², plus préférentiellement de 260 g/m² à 400 g/m², de préférence maximale de 320 g/m² à 355 g/m² ou dans lequel la couche de support présente de préférence un poids de 130 à 170 g/m².

11. Moyen selon l'une quelconque des revendications 1 à 10, dans lequel la couche de support est une couche de support comprenant une première couche de papier, une première couche de tissu, une première couche de non-tissé et/ou une première couche de plastique.

12. Moyen selon l'une quelconque des revendications 1 à 11, dans lequel la couche de support comprend une première couche de non-tissé et une seconde couche de non-tissé, la première couche de non-tissé étant reliée à la seconde couche de non-tissé et la première et la seconde couche de non-tissé comprenant des fibres, les fibres étant choisies pour la première et la seconde couche de non-tissé indépendamment les unes des autres du groupe comprenant des fibres de verre, des fibres de pâte de bois, des fibres de polyester, des fibres naturelles, des fibres cellulosiques et des mélanges de celles-ci.

13. Moyen selon l'une quelconque des revendications 1 à 12, dans lequel la première face et/ou la seconde face de la couche de support présente un revêtement.

14. Procédé pour lisser une surface, dans lequel la surface présente au moins une inégalité, comprenant les étapes suivantes :
Étape a) appliquer la colle, de préférence la colle pour tapis, plus préférentiellement la colle à dispersion pour tapis sur base aqueuse sur la surface, dans lequel la surface présente au moins une inégalité ; et/ou appliquer la colle sur la face du moyen dirigée vers ladite au moins une inégalité de la surface une fois le moyen étant fixé sur la surface ;
Étape b) appliquer un moyen selon l'une quelconque des revendications précédentes sur la surface obtenue de l'étape a) ; et
Étape c) facultativement, étaler le moyen.

15. Procédé pour fabriquer un moyen pour lisser une surface, dans lequel la surface présente au moins une inégalité, le moyen étant un moyen selon l'une quelconque des revendications précédentes et le procédé comprenant les étapes suivantes :
Étape a) : préparer une couche de support ;
Étape b) : mousser une mousse, de préférence une mousse telle que définie dans l'une quelconque des revendications précédentes ;
Étape c) : appliquer la mousse sur la couche de support ; et
Étape d) : sécher la mousse.
